(19) **Europäisches Patentamt / European Patent Office / Office européen des brevets**

(11) **EP 4 633 022 A1**

(12) **EUROPEAN PATENT APPLICATION**
published in accordance with Art. 153(4) EPC

(43) Date of publication:
**15.10.2025 Bulletin 2025/42**

(21) Application number: **23916307.4**

(22) Date of filing: **27.12.2023**

(51) International Patent Classification (IPC):
**H02M 3/00** (2006.01)    **H02J 1/00** (2006.01)

(52) Cooperative Patent Classification (CPC):
**H02J 1/00; H02M 3/00**

(86) International application number:
**PCT/JP2023/047111**

(87) International publication number:
**WO 2024/150694 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023 JP 2023003308**

(71) Applicant: **OMRON Corporation
Kyoto 600-8530 (JP)**

(72) Inventors:
• **SHEN, Liangyu
Kyoto-shi, Kyoto 600-8530 (JP)**
• **TOKUSAKI, Hiroyuki
Kyoto-shi, Kyoto 600-8530 (JP)**
• **DOI, Masashi
Kyoto-shi, Kyoto 600-8530 (JP)**
• **UEMATSU, Takeshi
Kyoto-shi, Kyoto 600-8530 (JP)**

(74) Representative: **Isarpatent
Patent- und Rechtsanwälte
Barth Hassa Peckmann & Partner mbB
Friedrichstraße 31
80801 München (DE)**

(54) **POWER CONVERSION DEVICE AND DC POWER SUPPLY SYSTEM**

(57) A power conversion device configured to step-up, step-up/step-down, or step-down DC power input from a DC power supply and output the DC power, the power conversion device being connected to a load in parallel with another power conversion device, the power conversion device including: an output current value acquisition unit; an output voltage value acquisition unit; and a control unit configured to control the output voltage, wherein the control unit includes: a correction value generation unit configured to generate an output current correction value for correcting the output current value based on an output current target value and the output current value; and a droop control unit configured to droop the output voltage target value based on a corrected output current value corrected by the output current correction value, and the control unit controls the output voltage based on the output voltage target value drooped and the output voltage value.

FIG. 1

**Description**

TECHNICAL FIELD

The present invention relates to a power conversion device and a DC power supply system.

BACKGROUND OF INVENTION

In the related art, a droop control method is used as one of parallel operation controls of a DC power supply system that supplies DC power using a plurality of converters using a storage battery as a power source.
In the droop control method, by providing an output voltage of each converter with a drooping characteristic based on an output current, a highly reliable system capable of performing control without exchanging information between the converters is obtained, but the output current cannot be controlled to an appropriate value based on a load current. Therefore, when the drooping characteristics of the respective converters connected in parallel vary, the output voltages of the respective converters become the same, but an imbalance of the output currents occurs. This can lead to an unstable DC connection.

With respect to such imbalance of the output current, in the power conversion system described in Patent Document 1, the target current of a part of the converters is set by detecting the load current, and the output current is controlled to an appropriate value, thereby eliminating the current imbalance. However, since such a method requires constant current control, it cannot be applied to a droop control method.

CITATION LIST

PATENT LITERATURE

Patent Document 1: JP 2020-120465 A

SUMMARY

TECHNICAL PROBLEM

The present invention has been made in view of the above problems, and an object of the present invention is to provide a technique capable of appropriately controlling an output current.

SOLUTION TO PROBLEM

The present invention for solving the above-described problems is a power conversion device configured to step-up, step-up/step-down, or step-down DC power input from a DC power supply and output the DC power, the power conversion device being connected to a load in parallel with another power conversion device configured to step-up, step-up/step-down, or step-down DC power input from another DC power supply and output the DC power, the power conversion device including:

an output current value acquisition unit configured to acquire an output current value output from the power conversion device;
an output voltage value acquisition unit configured to acquire an output voltage value output from the power conversion device; and
a control unit configured to control an output voltage output from the power conversion device, wherein the control unit includes:

a correction value generation unit configured to generate an output current correction value for correcting the output current value based on an output current target value and the output current value, the output current target value being a target value of an output current output from the power conversion device and being calculated by distributing, to the power conversion device and the other power conversion device, a sum of the output current value and another output current value output from the other power conversion device or a load current value input to the load according to a predetermined distribution method; and
a droop control unit configured to droop an output voltage target value, which is a target value of the output voltage output from the power conversion device, based on a corrected output current value, which is the output current value corrected by the output current correction value, and

the control unit controls the output voltage based on the output voltage target value drooped and the output voltage value.

According to this, since the output voltage is controlled by the droop control using the output current and the output current target value which is the target value of the output current output from the power conversion device and is calculated by distributing, to the power conversion device and the other power conversion device, the sum of the output current value and the other output current value output from the other power conversion device or the load current value input to the load according to the predetermined distribution method, even when a plurality of power conversion devices are operated in parallel, the output current can be appropriately controlled regardless of the load fluctuation.

Further, the present invention may include:

a communication unit configured to receive at least the output current value of the other power conversion device or the load current value; and

an output current target value calculation unit configured to calculate at least the output current target value by distributing, to the power conversion device and the other power conversion device, the sum of the output current value and the other output current value or the load current value according to the distribution method.

Further, the present invention may include a communication unit configured to transmit the output current value to the other power conversion device or an external device including an output current target value calculation unit configured to calculate at least the output current target value by distributing, to the power conversion device and the other power conversion device, the sum of the output current value and the other output current value or the load current value according to the distribution method, and receive the output current target value calculated by the output current target value calculation unit from the other power conversion device or the external device.

Further, in the present invention, the correction value generation unit may adjust the output current correction value based on a difference between the output current target value and the output current value.

According to this, the magnitude of the current output from the own power conversion device to the load is determined from the difference between the output current target value and the output current value, and the current correction value is adjusted accordingly, whereby more appropriate control of the output current becomes possible.

Further, in the present invention, the correction value generation unit may increase or decrease the output current correction value in accordance with a relationship between the output voltage value and a predetermined voltage value range and a relationship between the output current value and a predetermined current value range.

According to this, by increasing or decreasing the output current correction value according to the relationship between the output voltage value in the predetermined voltage value range and the output current value in the predetermined current value range, it is possible to realize an equilibrium state that is different from the output current target value but is approximate to the output current target value.

Further, the present invention is a DC power supply system comprising: a plurality of power conversion devices configured to output DC power to a load, the plurality of power conversion devices being connected in parallel to the load, wherein the power conversion steps-up, steps-up/steps-down, or steps-down DC power input from a DC power supply and outputs the DC power,

the power conversion device includes:

an output current value acquisition unit configured to acquire an output current value output from the power conversion device;

an output voltage value acquisition unit configured to acquire an output voltage value output from the power conversion device; and

a control unit configured to control an output voltage output from the power conversion device,

the control unit includes:

a correction value generation unit configured to generate an output current correction value for correcting the output current value based on an output current target value, which is a target value of an output current output from the power conversion device, and the output current value; and

a droop control unit configured to droop an output voltage target value, which is a target value of the output voltage output from the power conversion device, based on a corrected output current value, which is the output current value corrected by the output current correction value,

the power conversion device controls the output voltage based on the output voltage target value drooped and the output voltage value, and

the power conversion device includes an output current target value calculation unit configured to calculate the output current target value of the power conversion device included in the DC power supply system by distributing, to the plurality of power conversion devices, a total value of the output current values output from the plurality of power conversion devices included in the DC power supply system or a load current value input to the load according to a predetermined distribution method.

According to this, by distributing, to the plurality of power conversion devices, the sum of the output current values output from the plurality of power conversion devices included in the DC power supply system or the load current value input to the load according to the predetermined distribution method, the output voltage is controlled by the droop control using the output current target value of the power conversion device included in the DC power supply system and the output current, so that the output current can be appropriately controlled regardless of the load fluctuation.

Further, in the present invention,
the correction value generation unit may adjust the output current correction value based on a difference between the output current target value and the output current value.

According to this, the magnitude of the current output from the own power conversion device to the load is determined from the difference between the output current target value and the output current value, and the current correction value is adjusted accordingly, whereby more appropriate control of the output current becomes possible.

Further, in the present invention,
the correction value generation unit may increase or decrease the output current correction value in accordance with a relationship between the output voltage value and a predetermined voltage value range and a relationship between the output current value and a predetermined current value range.

According to this, by increasing or decreasing the output current correction value according to the relationship between the output voltage value in the predetermined voltage value range and the output current value in the predetermined current value range, it is possible to realize an equilibrium state that is different from the output current target value but is approximate to the output current target value.

Further, in the present invention,

the output current target value calculation unit performs the distribution,
when the power to be supplied to the load is an amount of power suppliable by some power conversion devices of the plurality of power conversion devices, to reduce an operation rate of the power conversion devices included in the plurality of power conversion devices.

According to this, when the power supplied to the load is the amount of power that can be supplied by some power conversion devices of the plurality of power conversion devices, the efficiency can be improved and the power can be saved by distributing the power so as to reduce the operation rate of the power conversion devices included in the DC power supply system. When the output current target value is calculated by distribution so as to reduce the operation rate of the power conversion device included in the DC power supply system, for example, the power conversion devices are operated in order from the power conversion device having the largest power capacity among the power conversion devices included in the DC power supply system, or when the power capacities of the power conversion devices are equal, the power conversion devices are operated in order from the power conversion device having the highest efficiency, or when the DC power supply is a storage battery, the power conversion devices are operated in order from the power conversion device having the largest charge amount of the connected storage battery, but the distribution is not limited thereto. Here, the part of the power conversion devices may be one power conversion device, or may be two or more power conversion devices according to the amount of power supplied to the load.

Further, the present invention is a DC power supply system including a first type power conversion device configured to step up, step-up/step-down, or step down DC power input from a first type DC power supply and output the DC power and a second type power conversion device configured to step up, step-up/step-down, or step down DC power input from a second type DC power supply and output the DC power, wherein
the first type power conversion device includes:

a first type output current value acquisition unit configured to acquire a first type output current value output from the first type power conversion device;
a first type output voltage value acquisition unit configured to acquire a first type output voltage value output from the first type power conversion device; and
a first type control unit configured to control a first type output voltage output from the first type power conversion device,
the first type control unit includes:

a correction value generation unit configured to generate a first type output current correction value for correcting the first type output current value based on a first type output current target value, which is a target value of a first type output current output from the first type power conversion device, and the first type output current value; and

a first type droop control unit configured to droop a first type output voltage target value, which is a target value of the first type output voltage output from the first type power conversion device, based on a first type corrected output current value, which is the first type output current value corrected by the first type output current correction value,

the first type power conversion device controls the first type output voltage based on the first type output voltage target value drooped and the first type output voltage value,

the second type power conversion device includes:

a second type output current value acquisition unit configured to acquire a second type output current value output from the second type power conversion device;

a second type output voltage value acquisition unit configured to acquire a second type output voltage value output from the second type power conversion device; and

a second type control unit configured to control a second type output voltage output from the second type power conversion device,

the second type control unit includes:

a second type droop control unit configured to droop a second type output voltage target value, which is a target value of the second type output voltage output from the second type power conversion device, based on the second type output current value; and

the second type power conversion device configured to control the second type output voltage based on the second type output voltage target value drooped and the second type output voltage value,

the DC power supply system supplies DC power to a load by connecting a plurality of the first type power conversion devices and one or more of the second type power conversion devices in parallel, and

the DC power supply system includes an output current target value calculation unit configured to calculate the first type output current target value of the first type power conversion device included in the DC power supply system by distributing, to the first type power conversion device and the second type power conversion device, a total value of the first type output current value and the second type output current value or a load current value input to the load according to a predetermined distribution method.

According to this, since the output voltage is controlled by the droop control using the first type output current target value of the first type power conversion device calculated by distributing, to the first type power conversion device and the second type power conversion device, the sum of the output current values output from the plurality of first type power conversion devices and at least one or more second type power conversion devices included in the DC power supply system or the load current value input to the load according to the predetermined distribution method, and the output current, it is possible to appropriately control the output current of the first type power conversion device and the second type power conversion device included in the DC power supply system regardless of the load fluctuation.

Further, in the present invention,
the second type power conversion device may be set based on an amount of power suppliable to the load.

As described above, in the DC power supply system including the plurality of power conversion devices that are connected in parallel to the load and supply power, by setting the power conversion device to be operated as the second type power conversion device based on the amount of power suppliable to the load, even in the DC power supply system in which the first type power conversion device and the second type power conversion device are mixed, the output currents of the first type power conversion device and the second type power conversion device can be appropriately controlled regardless of the load fluctuation. When the second type power conversion device is set based on the amount of power suppliable to the load, for example, a power conversion device having the largest power capacity among the power conversion devices included in the DC power supply system is set as the second type power conversion device, and when the power capacities of the power conversion devices are equal, a power conversion device having the highest efficiency is set as the second type power conversion device, and when the DC power source is a storage battery, a power conversion device having the largest charge amount of the connected storage battery is set as the second type power conversion device, but no such limitation is intended.

Further, in the present invention,
the correction value generation unit may adjust the first type output current correction value based on a difference between the first type output current target value and the first type output current value.

According to this, the first type power conversion device included in the DC power supply system determines the magnitude of the current output from its own power conversion device to the load from the difference between the first type output current target value and the first type output current value, and adjusts the first type current correction value according to the magnitude of the current, whereby it is possible to more appropriately control the output currents of the first type power conversion device and the second type power conversion device included in the DC power supply system.

Further, in the present invention, the output current correction value may be increased or decreased in accordance with a relationship between the first type output voltage value and a predetermined voltage value range and a relationship between the first type output current value and a predetermined current value range.

According to this, by increasing or decreasing the output current correction value in accordance with the relationship between the first type output voltage value and the predetermined voltage value range and the relationship between the first type output current value and the predetermined current value range, it is possible to realize an equilibrium state that is different from the output current target value but is approximate to the output current target value.

ADVANTAGEOUS EFFECTS OF INVENTION

According to the present invention, it is possible to provide a technique capable of appropriately controlling an output current.

BRIEF DESCRIPTION OF THE DRAWINGS

FIG. 1 is a diagram illustrating a schematic configuration of a DC power supply system according to Example 1 of the present invention.

FIG. 2 is a flowchart illustrating a procedure of output current target value calculation and cross flow target value calculation processing according to Example 1 of the present invention.

FIG. 3 is a diagram for explaining the principle of droop control according to Example 1 of the present invention.

FIG. 4 is a diagram illustrating a simulation result in a comparative example of the DC power supply system according to Example 1 of the present invention.

FIG. 5 is a diagram illustrating a simulation result in the DC power supply system according to Example 1 of the present invention.

FIG. 6 is a diagram illustrating another simulation result in the comparative example of the DC power supply system according to Example 1 of the present invention.

FIG. 7 is a diagram illustrating another simulation result in the DC power supply system according to Example 1 of the present invention.

FIG. 8 is a flowchart illustrating a procedure of a cross flow target value adjustment process in the DC power supply system according to Example 1 of the present invention.

FIG. 9 is a diagram illustrating a schematic configuration of a DC power supply system according to Modified Example 1 of Example 1 of the present invention.

FIG. 10 is a diagram illustrating a schematic configuration of a DC power supply system according to Modified Example 2 of Example 1 of the present invention.

FIG. **11** is a diagram illustrating a schematic configuration of a DC power supply system according to Example 2 of the present invention.

FIG. 12 is a diagram illustrating a simulation result in a comparative example of the DC power supply system according to Example 2 of the present invention.

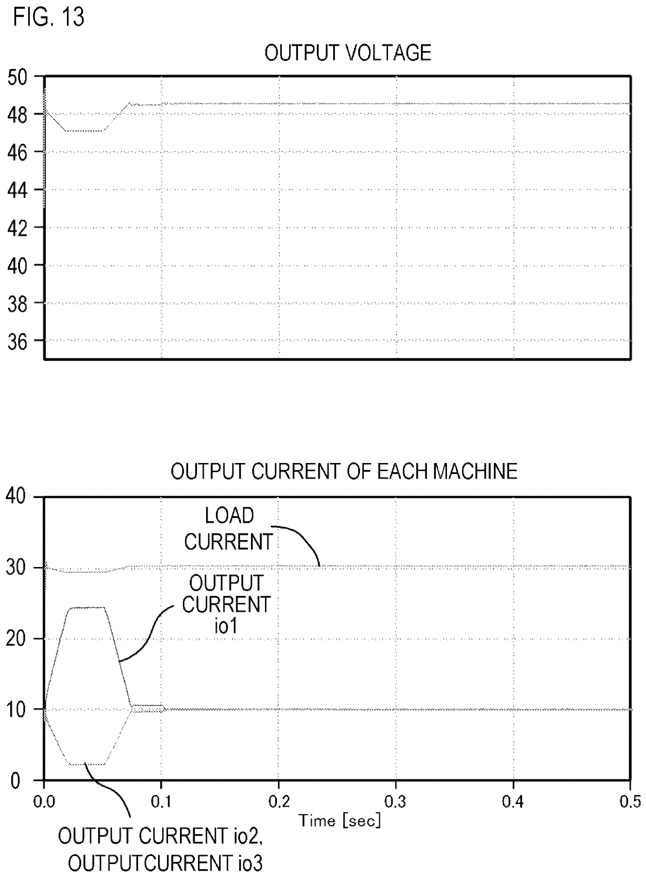

FIG. 13 is a diagram illustrating a simulation result in the DC power supply system according to Example 2 of the present invention.

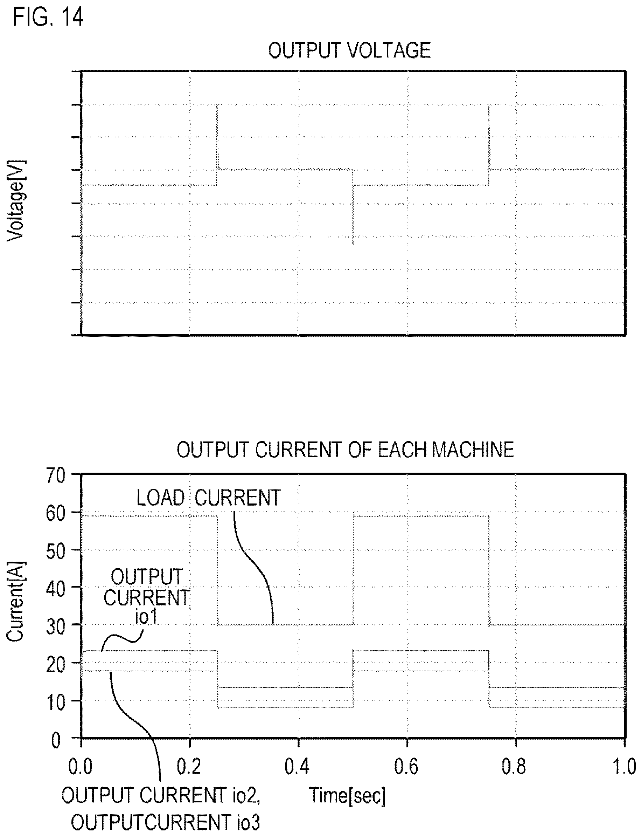

FIG. 14 is a diagram illustrating another simulation result in a comparative example of the DC power supply system according to Example 2 of the present invention.

FIG. 15 is a diagram illustrating another simulation result in the DC power supply system according to Example 2 of the present invention.

FIG. 16 is a diagram illustrating a schematic configuration of a DC power supply system according to Modified Example 1 of Example 2 of the present invention.

FIG. 17 is a diagram illustrating a schematic configuration of a DC power supply system according to Modified Example 2 of Example 2 of the present invention.

FIG. 18 is a diagram illustrating a schematic configuration of a DC power supply system according to another modified example of the present invention.

DESCRIPTION OF EMBODIMENTS

Application Example

Hereinafter, an application example of the present invention will be described with reference to the drawings.

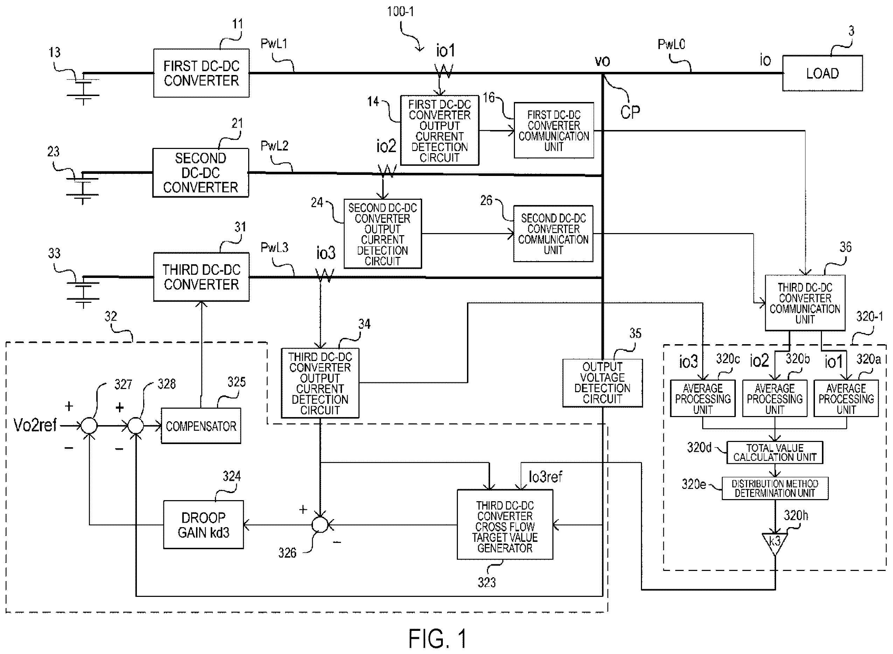

FIG. 1 is a diagram illustrating a schematic configuration of a DC power supply system 100-1 according to an application example of the present invention. The DC power supply system 100-1 includes a first DC-DC converter **11** that steps-up, steps-up/steps-down, or steps-down a voltage of DC power discharged from a storage battery 13 and outputs the DC power, a second DC-DC converter 21 that steps-up, steps-up/steps-down, or steps-down a voltage of DC power discharged from a storage battery 23 and outputs the DC power, and a third DC-DC converter 31 that steps-up, steps-up/steps-down, or steps-down a voltage of DC power discharged from a storage battery 33 and outputs the DC power, and supplies DC power to a load 3 by operating the first DC-DC converter 11, the second DC-DC converter 21, and the third DC-DC converter 31 connected in parallel to the load 3 in parallel.

The third DC-DC converter 31 includes an output voltage detection circuit 35, a third DC-DC converter output current detection circuit 34, a third DC-DC converter communication unit 36, and a control unit 32, and the control unit 32 includes an output current target value calculation unit 320-1, a third DC-DC converter cross flow target value generator 323, a droop gain (kd3) multiplier 324, a compensator 325, and addition points 326, 327, and 328. Although the third DC-DC converter 31 will be described below, the first DC-DC converter 11 and the second DC-DC converter 21 have the same configuration.

The output current target value calculation unit 320-1 calculates the output current target value lo3ref of the third DC-DC converter 31 based on the output current value io1, the output current value io2 and the output current value io3. The output current value io3 is acquired from the third DC-DC converter output current detection circuit 34, and the output current value io1 and the output current value io2 are acquired from the first DC-DC converter 11 and the second DC-DC converter 21, respectively, via the third DC-DC converter communication unit 36.

The output current values io1, io2, and io3 are averaged by the average processing units 320a, 320b, and 320c, respectively, and then summed by the total value calculation unit 320d. The output current value total value is distributed according to a distribution method determined or set in advance by a distribution method determination unit 320e, and an output current target value (hereinafter, simply referred to as "output current target value" unless otherwise specified) lo3ref is calculated. For example, when the power capacities of the DC-DC converters 11, 21, and 31 are denoted by P1, P2, and P3, respectively, the output current target value lo3ref is calculated by multiplying the output current total value by a coefficient k3 calculated as k3 = P3/(P1 + P2 + P3) in a calculation execution unit 320h. Although not illustrated in FIG. 1, each of the first DC-DC converter 11 and the second DC-DC converter 21 includes an output current target value calculation unit having a configuration similar to that of the output current target value calculation unit 320. Then, in the output current target value calculation unit of the first DC-DC converter 11, the calculation execution unit multiplies the output current total value by the coefficient k1 calculated as k1 = P1/(P1 + P2 + P3), thereby calculating the output current target value lo1ref. Similarly, in the output current target value calculation unit of the second DC-DC converter 21, the calculation execution unit multiplies the output current total value by the coefficient k2 calculated as k2 = P2/(P1 + P2 + P3), thereby calculating the output current target value lo2ref.

The third DC-DC converter cross flow target value generator 323 receives the output voltage value vo from the output voltage detection circuit 35, and receives the second DC-DC converter output current value (hereinafter simply referred to as "output current value" unless otherwise specified) io3 from the third DC-DC converter output current detection circuit 34. The output current target value lo3ref of the third DC-DC converter 31 is also input from the output current target value calculation unit 320-1 to the third DC-DC converter cross flow target value generator 323. The third DC-DC converter cross flow target value generator 323 generates a third DC-DC converter cross flow target value (hereinafter, simply referred to as "cross flow target value" unless otherwise specified) Icr3ref based on at least the output voltage value vo, the output current value io3, and the output current target value lo3ref.

The output voltage value vo is subtracted from a value obtained by subtracting a value obtained by multiplying a value obtained by subtracting the cross flow target value Icr3ref from the output current value io3 by the droop gain kd3 from the third DC-DC converter output voltage target value vo3ref, and the resultant value is input to the compensator 325, and the output voltage vo3 of the third DC-DC converter 31 is controlled based on a command value output from the compensator 325.

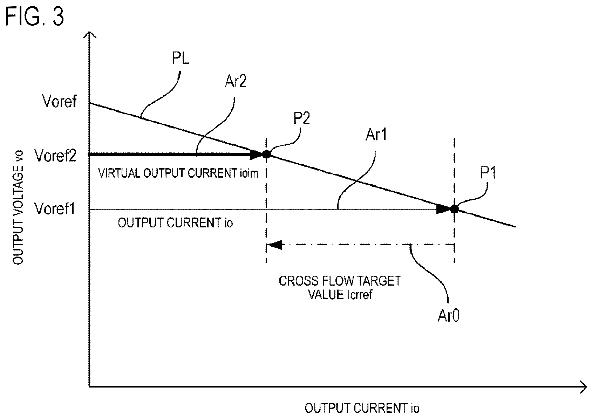

FIG. 3 is a diagram illustrating principles of the droop control performed in the control unit 32 of the third DC-DC converter 31. FIG. 3 is a graph in which the horizontal axis represents the output current value io3 and the vertical axis represents the output voltage value vo3, and a straight line having a slope kd3 descending to the right from the output voltage target value Vo3ref, which is an intersection with the vertical axis, is a characteristic line PL of the droop control. The output current value io3 detected by the third DC-DC converter output current detection circuit 34 is indicated by a thin-line arrow Ar1 parallel to the horizontal axis. The intersection P1 of the arrow Ar1 and the characteristic line PL corresponds to the output voltage target value Vo3ref1. In the control system illustrated in FIG. 1, the droop gain kd3 is multiplied by a value obtained by subtracting the cross flow target value Icr3ref indicated by the dashed-dotted line arrow Ar0 from the output current value io3. This means that, in FIG. 3, the drooping characteristic is applied to the output current value (virtual output current value) io3im by a value indicated by a bold line arrow Ar2 parallel to the horizontal axis, which is equal to a value obtained by subtracting the cross flow target value Icr3ref indicated by a dashed-dotted line arrow Ar0 from the output current value io3. At this time, the output voltage target value Vo3ref decreases to the output voltage target value Vo3ref2 corresponding to the intersection P2 between the arrow Ar2 and the characteristic line PL. In this manner, in the main droop control, the output voltage target value Vo3ref is not drooped to the output voltage target value Vo3ref1 by the droop control based on the output current lo3, but is drooped to the output voltage target value Vo3ref2 by the droop control based on the virtual output current value io3im.

As described above, by the main droop control based on the output current target values lo1ref, lo2ref, and lo3ref calculated by distributing the output current total value, which is the sum of the output currents of the DC-DC converters 11, 21, and 31, according to the predetermined distribution method, the output currents io1, io2, and io3 can be appropriately controlled.

Example 1

Hereinafter, the DC power supply system 100-1 according to Example 1 of the present invention will be described in more detail with reference to the drawings. However, the configuration of the apparatus and the system described in the present example should be changed as appropriate in accordance with various conditions. That is, the scope of the present invention is not intended to be limited to the present example described below.

FIG. 1 is a diagram illustrating a schematic configuration of the first DC-DC converter 11, the second DC-DC converter 21, a third DC-DC converter 31, and the control unit 32 that constitute the DC power supply system 100-1 according to Example 1 of the present invention. The control unit of the first DC-DC converter 11 and the control unit of the second DC-DC converter 21 also have the same configuration as the control unit 32 of the third DC-DC converter 31, but the description thereof will be omitted. In FIG. 1, the third DC-DC converter 31 and the control unit 32 are separately illustrated for description, but as a specific device, the control unit 32 is accommodated in a housing of the third DC-DC converter 31 (the same applies to a DC-DC converter described below). Here, the DC power supply system 100-1 corresponds to a DC power supply system of the present invention, and the first DC-DC converter 11, the second DC-DC converter 21, and the third DC-DC converter 31 correspond to a plurality of power conversion devices of the present invention, and each of them corresponds to a power conversion device of the present invention. When the third DC-DC converter 31 corresponds to the power conversion device of the present invention, the first DC-DC converter 11 and the second DC-DC converter 21 correspond to another power conversion device of the present invention.

The DC power supply system 100-1 includes the first DC-DC converter 11 that steps-up, steps-up/steps-down, or steps-down the voltage of the DC power discharged from the storage battery 13 and outputs the DC power, the second DC-DC converter 21 that steps-up, steps-up/steps-down, or steps-down the voltage of the DC power discharged from the storage battery 23 and outputs the DC power, and the third DC-DC converter 31 that steps-up, steps-up/steps-down, or steps-down the voltage of the DC power discharged from the storage battery 33 and outputs the DC power. In the DC power supply system 100-1, the three DC-DC converters: the first DC-DC converter 11, the second DC-DC converter 21 and the third DC-DC converter 31 are connected in parallel to the load 3, and supply DC power to the load 3 by operating in parallel. Although FIG. 1 illustrates the DC power supply system 100-1 including the first DC-DC converter 11, the second DC-DC converter 21, and the third DC-DC converter 31 respectively connected to the three storage batteries 13, 23, and 33, the DC power supply system 100-1 may include four or more storage batteries and DC-DC converters connected in parallel, and various distributed power sources can be adopted as the DC power source, and the DC power source is not limited to the storage battery. Here, the storage batteries 13, 23, and 33 correspond to the DC power supply of the present invention.

The voltage (output voltage) at the connection point CP to which an output line PwL1 of the first DC-DC converter 11, an output line PwL2 of the second DC-DC converter 21, and an output line PwL3 of the third DC-DC converter 31 are connected is indicated by vo, and the current (load current) supplied to the load 3 through the power line PwL0 is indicated by io. The load current value io corresponds to a load current value of the present invention.

The third DC-DC converter 31 includes the control unit 32, the output voltage detection circuit 35, the third DC-DC converter output current detection circuit 34, and the third DC-DC converter communication unit 36. The control unit 32 includes an output current target value calculation unit 320-1, a third DC-DC converter cross flow target value generator 323, a droop gain (kd3) multiplier 324, a compensator 325, and addition points 326, 327, and 328. The control unit 32 can be configured to include a computer including a central processing unit (CPU) and a memory, a digital signal processor (DSP), an application specific integrated circuit (ASIC), and the like. Some or all of the functions of each unit may be implemented by executing software on hardware or may be implemented by dedicated hardware. The control unit 32 corresponds to the control unit of the present invention (the correspondence relationship between the third DC-DC converter 31 and the configuration of the present invention is also established for the corresponding configurations of the first DC-DC converter 11 and the second DC-DC converter 21 unless otherwise specified).

The output voltage detection circuit 35 detects the output voltage vo at the connection point CP. The third DC-DC converter output current detection circuit 34 detects a current (third DC-DC converter output current) io3 flowing through an output line PwL3 connecting the output end of the third DC-DC converter 31 and the connection point CP. The third DC-DC converter cross flow target value generator 323 receives the output voltage value vo from the output voltage detection circuit 35, and receives the third DC-DC converter output current value (hereinafter simply referred to as "output current value" unless otherwise specified) io3 from the third DC-DC converter output current detection circuit 34. Further, an output current target value (hereinafter, simply referred to as "output current target value" unless otherwise specified) io3ref of the third DC-DC converter 31 is also input to the third DC-DC converter cross flow target value generator 323 from an output current target value calculation unit 320-1 described later. The third DC-DC converter cross flow target value generator 323 generates the third DC-DC converter cross flow target value (hereinafter, simply referred to as "cross flow target value" unless otherwise specified) Icr3ref based on at least the output voltage value vo, the output current value io3, and the output current target value lo3ref. Here, the output voltage detection circuit 35 corresponds to an output voltage value acquisition unit of the present invention, and the output voltage (value) vo corresponds to an output voltage (value) of the present invention. The third DC-DC converter output current detection circuit 34 corresponds to an output current value acquisition unit according to the present invention, and the output current (value) io3 corresponds to an output current (value) according to the present invention. The output current target value io3ref corresponds to an output current target value of the present invention. The third DC-DC converter cross flow target value generator 323 corresponds to a correction value generation unit of the present invention, and the cross flow target value Icr3ref corresponds to an output current correction value of the present invention. When the output current value io3 corresponds to an output current value of the present invention, the output current values io1 and io2 correspond to other output current values of the present invention.

The third DC-DC converter communication unit 36 is a communication interface for transmitting and receiving information to and from an external device including at least the first DC-DC converter 11 and the second DC-DC converter 21. Similarly, the first DC-DC converter 11 includes a first DC-DC converter communication unit 16 which is a communication interface for transmitting and receiving information to and from an external device including at least the third DC-DC converter 31. Similarly, the second DC-DC converter 21 includes a second DC-DC converter communication unit 26 as a communication interface for transmitting and receiving information to and from an external device including at least the third DC-DC converter 31.

The output current target value calculation unit 320-1 calculates the output current target value lo3ref of the third DC-DC converter 31 based on the output current value io1, the output current value io2 and the output current value io3. As will be described later, the first DC-DC converter 11 and the second DC-DC converter 21 similarly include output current target value calculation units that calculate the output current target value lo1ref and the output current target value lo2ref, respectively.

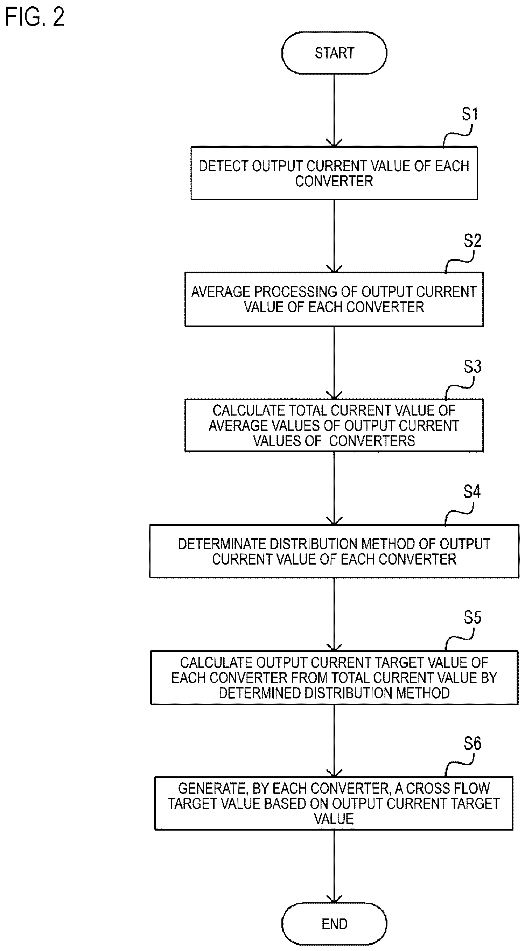

FIG. 2 is a flowchart illustrating a procedure of processing from detection of an output current to generation of a cross flow target value in each of the DC-DC converters 11, 21, and 31.

As described above, the first DC-DC converter output current detection circuit 14 of the first DC-DC converter 11 detects the output current value io1 output from the first DC-DC converter 11, the second DC-DC converter output current detection circuit 24 of the second DC-DC converter 21 detects the output current value io2 output from the second DC-DC converter 21, and the third DC-DC converter output current detection circuit 34 of the third DC-DC converter 31 detects the output current value io3 output from the third DC-DC converter 31 (step S1).

The output current value io1 of the first DC-DC converter **11** and the output current value io2 of the second DC-DC converter 21 detected in this manner are respectively transmitted from the first DC-DC converter communication unit 16 and the second DC-DC converter communication unit 26 to the third DC-DC converter communication unit 36, and are input to the third output current target value calculation unit 320-1 via the third DC-DC converter communication unit 36. The output current value io3 of the third DC-DC converter 31 is input from the third DC-DC converter output current detection circuit 34 to the output current target value calculation unit 320-1.

The output current target value calculation unit 320-1 includes an average processing unit 320a that averages the output current value io1 of first DC-DC converter 11, an average processing unit 320b that averages the output current value io2 of the second DC-DC converter 21, and an average processing unit 320c that averages the output current value io3 of the third DC-DC converter 31. As described above, averaging processing is performed on the output current value io1, the output current value io2, and the output current value io3 input to the output current target value calculation unit 320-1 in the average processing unit 320a, the average processing unit 320b, and the average processing unit 320c, respectively (step S2).

The output current target value calculation unit 320-1 includes a total value calculation unit 320d that calculates an output current total value by totaling the averaged output current values. As described above, with respect to the output current value io1, the output current value io2, and the output current value io3 averaged in the average processing unit 320a, the average processing unit 320b, and the average processing unit 320c, respectively, the output current total value is calculated in the total value calculation unit 320d (step S3). The output current target value calculation unit 320-1 corresponds to an output current target value calculation unit of the present invention. Further, although omitted in FIG. 1, the output current target value calculation units provided in the first DC-DC converter **11** and the second DC-DC converter 21 correspond to an output current target value calculation unit of the present invention.

Further, the output current target value calculation unit 320-1 includes a distribution method determination unit 320e for distributing the output current total value to calculate output current target values lo1ref, lo2ref, and lo3ref of the DC-DC converters 11, 21, and 31. Various methods can be adopted as a distribution method for calculating the output current target values lo1ref, lo2ref, and lo3ref of the DC-DC converters 11, 21, and 31 by distributing the output current total value. As illustrated below, the distribution method determination unit 320e determines coefficients k1, k2, and k3 for distributing the output current total value by multiplying the output current total value by the respective coefficients (step S4). Here, the output current target values lo1 ref and lo2ref also correspond to the output current target values of the present invention.

(1) The output current target value is determined by distributing the output current total value based on the power capacity ratio of each converter.

When the power capacities of the first DC-DC converter 11, the second DC-DC converter 21, and the third DC-DC converter 31 are represented by P1, P2, and P3, respectively, the following expression is satisfied.

$$k1 = P1/(P1 + P2 + P3);$$

$$k2 = P2/(P1 + P2 + P3);$$

$$k3 = P3/(P1 + P2 + P3).$$

(2) The output current target value is determined by distributing the output current total value based on the efficiency ratio of each converter.

When the efficiencies of the first DC-DC converter 11, the second DC-DC converter 21, and the third DC-DC converter 31 are $\eta$1, $\eta$2, and $\eta$3, respectively, the following expression is satisfied.

$$k1 = \eta1/(\eta1 + \eta2 + \eta3);$$

$$k2 = \eta2/(\eta1 + \eta2 + \eta3);$$

$$k3 = \eta3/(\eta1 + \eta2 + \eta3).$$

(3) The output current target value is determined by distributing the output current total value based on the charge amount ratio of the storage battery connected to each converter.

Since the charging amount of the storage battery is expressed by the storage battery capacity $\times$ the charging ratio, when the capacitance and the charging ratio of the storage battery 13 connected to the first DC-DC converter 11 are denoted by J1 and SOC_1, the capacitance and the charging ratio of the storage battery 23 connected to the second DC-DC converter 21 are denoted by J2 and SOC_2, and the capacitance and the charging ratio of the storage battery 33 connected to the third DC-DC converter 31 are denoted by J3 and SOC_3, the following expression is satisfied.

$$k1 = J1 \times SOC\_1/(J1 \times SOC\_1 + J2 \times SOC\_2 + J3 \times SOC\_3);$$

$$k2 = J2 \times SOC\_2/(J1 \times SOC\_1 + J2 \times SOC\_2 + J3 \times SOC\_3);$$

$$k3 = J3 \times SOC\_3/(J1 \times SOC\_1 + J2 \times SOC\_2 + J3 \times SOC\_3).$$

(4) The output current target value is determined by distributing the output current total value in consideration of the load state.

When the load is a light load, that is, when the load is equal to or less than the maximum amount of power that can be supplied by some of the plurality of DC-DC converters 11 and the like connected in parallel (hereinafter, a case where the load is the amount of power that can be supplied by one DC-DC converter will be described, but a case where the number of DC-DC converters is increased by one to two or more depending on the state of the load is also included), the output current value target value can be determined such that current is supplied from only one DC-DC converter (for example, the first DC-DC converter 11).

In this case, the output current target value is determined so as to reduce the operation rate of the plurality of converters as much as possible in consideration of efficiency and power saving.

(1) When the plurality of DC-DC converters 11 and the like have different power capacities, a current is supplied only from the DC-DC converter having the largest power capacity.

That is, when the DC-DC converter having the largest power capacity is the x-th DC-DC converter (here, x = 1), kx = 1 and ka = 0 (Px > Pa, the a-th DC-DC converter is all the DC-DC converters except the x-th DC-DC converter, here, a = 2 and 3).

(2) When the power capacities of the plurality of DC-DC converters 11 and the like are equal, the current is supplied only from the DC-DC converter having the highest efficiency.

That is, when the DC-DC converter having the highest efficiency is the x-th DC-DC converter (here, x = 1), kx = 1 and ka = 0 (Px = Pa and $\eta x > \eta a$, and the a-th DC-DC converter is all the DC-DC converters except the x-th DC-DC converter, here, a = 2 and 3).

(3) When the DC power supply is a storage battery, the current is supplied only from the DC-DC converter having the largest charge amount of the storage battery.

That is, when the DC-DC converter having the largest charge amount of the connected storage battery is the x-th DC-DC converter (here, x = 1), kx = 1 and ka = 0 (Jx × SOC_1> Ja × SOC_a, the a-th DC-DC converter is all the DC-DC converters except the x-th DC-DC converter, here, a = 2 and 3).

The distribution method for calculating the output current target values lo1ref, lo2ref, and lo3ref of the DC-DC converters 11, 21, and 31 by distributing the output current total value is not limited to the above-described method. In the distribution method (1) described above, the information on the power capacities or the power capacity ratio of the DC-DC converters 11, 21, and 31 may be acquired and stored in advance, and thus the distribution method determination unit 320e and the distribution method determination step (step S4) may be omitted. Similarly, in the distribution method (2), the information on the efficiencies or the efficiencies ratios of the DC-DC converters 11, 21, and 31 may be acquired and stored in advance, and the distribution method determination unit 320e and the distribution method determination step (step S4) may be omitted. In the distribution method (3) described above, the capacities and the charging rates of the storage batteries 13, 23, and 33 may be dynamically acquired and the coefficients k1, k2, and k3 may be calculated, or the acquired values may be held and the capacities and the charging rates of the storage batteries 13, 23, and 33 may be dynamically acquired and updated for each predetermined cycle of output current target value calculation.

The output current target value calculation unit 320-1 includes a calculation execution unit 320h that calculates the output current target value lo3ref of the third DC-DC converter 31 according to the determined distribution method. The calculation execution unit 320h calculates the output current target value lo3ref of the third DC-DC converter 31 according to the determined distribution method (step S5). To be specific, the calculation execution unit 320h multiplies the output current total value by the coefficient k3 to calculate the output current target value lo3ref.

The first DC-DC converter 11 includes an output current target value calculation unit similar to the output current target value calculation unit 320-1. In the output current target value calculation unit of the first DC-DC converter 11, the output current io1 output from the first DC-DC converter output current detection circuit 14, the output current io2 output from the second DC-DC converter output current detection circuit 24 and acquired via the second DC-DC converter communication unit 26 and the first DC-DC converter communication unit 16, and the output current io3 output from the third DC-DC converter output current detection circuit 34 and acquired via the third DC-DC converter communication unit 36 and the first DC-DC converter communication unit 16 are averaged in the average processing unit, respectively, the total value calculation unit calculates an output current total value, the distribution method determination unit determines the coefficient k1 for distributing the output current total value, and the calculation execution unit multiplies the output current total value by the coefficient k1 to calculate the output current target value lo1ref (step S5), and outputs the output current target value to the first DC-DC converter cross flow target value generator.

The second DC-DC converter 21 also includes an output current target value calculation unit similar to the output current target value calculation unit 320-1. In the output current target value calculation unit of the second DC-DC converter 21, the output current io1 output from the first DC-DC converter output current detection circuit 14 and acquired via the first DC-DC converter communication unit 16 and the second DC-DC converter communication unit 26; the output current io2 output from the second DC-DC converter output current detection circuit 24, and the output current io3 output from the third DC-DC converter output current detection circuit 34 and acquired via the third DC-DC converter communication unit 36 and the second DC-DC converter communication unit 26 are averaged in the average processing unit, respectively, the total value calculation unit calculates an output current total value, the distribution method determination unit determines the coefficient k2 for distributing the output current total value, and the calculation execution unit multiplies the output current total value by the coefficient k2 to calculate the output current target value lo2ref (step S5), and outputs the output current target value to the second DC-DC converter cross flow target value generator.

Based on the output current target value lo3ref, the output voltage value vo, and the output current value io3 calculated by the output current target value calculation unit 320-1, the cross flow target value Icr3ref is generated by the third DC-DC converter cross flow target value generator 323 (step S6). Although not illustrated in FIG. 1, similarly, in the first DC-DC converter 11 cross flow target value generator, the cross flow target value Icr1ref of the first DC-DC converter 11 is generated based on the output current target value lo1ref, the output voltage value vo, and the output current value io1 (step S6), and in the second DC-DC converter cross flow target value generation, the cross flow target value Icr2ref of the second DC-DC converter 21 is generated based on the output current target value lo2ref, the output voltage value vo, and the output current value io2 (step S6).

The output current target value of each converter described based on the flowchart of FIG. 2 is repeated in a communication cycle, and the output current target value of each converter is updated. The generation processing and the update processing of the cross flow target value of each converter are not limited to the case of being repeated in the communication cycle, and the update cycle can be set and adjusted as appropriate.

The cross flow target value Icr3ref generated in the third DC-DC converter cross flow target value generator 323 is subtracted from the output current value io3 at the addition point 326 and input to the droop gain multiplier 324. After being multiplied by the droop gain kd3 in the droop gain multiplier 324, it is subtracted from the third DC-DC converter output voltage target value vo3ref at the addition point 327. In this manner, the output voltage value vo is subtracted at the addition point 328 from the value obtained by subtracting the cross flow target value Icr3ref from the output current value io3 from the third DC-DC converter output voltage target value vo3ref, and the result is multiplied by the droop gain kd3, and the output voltage value vo is input to the compensator 325. Then, the output voltage vo3 of the third DC-DC converter 31 is controlled based on the command value output from the compensator 325. The value (a virtual output current value described later) io3im obtained by subtracting the cross flow target value Icr3ref from the output current value io3 corresponds to the corrected output current value of the present invention. The third DC-DC converter output voltage target value vo3ref corresponds to an output voltage target value of the present invention. The droop gain multiplier 324 and the addition point 327 correspond to a droop control unit of the present invention.

The third DC-DC converter 31 performs a drooping operation to droop the output voltage according to the output current io3. However, the control unit 32 of the third DC-DC converter 31 does not multiply the output current value io3 by the droop gain kd3, but multiplies the value obtained by subtracting the cross flow target value Icr3ref from the output current value io3 by the droop gain kd3 as described above. FIG. 3 is a diagram illustrating the principles of droop control (hereinafter also referred to as "main droop control") performed by the control unit 32 of the third DC-DC converter 31. FIG. 3 is a graph in which the horizontal axis represents the output current value io3 and the vertical axis represents the output voltage value vo, and a straight line having a slope kd3 descending to the right from the output voltage target value Vo3ref, which is an intersection with the vertical axis, is a characteristic line PL of the droop control (since the principles of FIG. 3 are commonly applied to the main droop control, "3" indicating the third DC-DC converter 31 is omitted in the reference numeral). The output current value io3 detected by the third DC-DC converter output current detection circuit 322 is indicated by a thin-line arrow Ar1 parallel to the horizontal axis. The intersection P1 of the arrow Ar1 and the characteristic line PL corresponds to the output voltage target value Vo3ref1. In the control system illustrated in FIG. 1, the droop gain kd3 is multiplied by a value obtained by subtracting the cross flow target value Icr3ref indicated by the dashed-dotted line arrow Ar0 from the output current value io3. This means that, in FIG. 3, the drooping characteristic is applied to the output current value (virtual output current value) io3im by a value indicated by a bold line arrow Ar2 parallel to the horizontal axis, which is equal to a value obtained by subtracting the cross flow target value Icr3ref indicated by a dashed-dotted line arrow Ar0 from the output current value io3. At this time, the output voltage target value Vo3ref decreases to the output voltage target value Vo3ref2 corresponding to the intersection P2 between the arrow Ar2 and the characteristic line PL. In this manner, in the main droop control, the output voltage target value Vo3ref is not drooped to the output voltage target value Vo3ref1 by the droop control based on the output current value io3, but is drooped to the output voltage target value Vo3ref2 by the droop control based on the virtual output current value io3im. Here, the cross flow target value Icr3ref corresponds to the output current correction value of the present invention, and the virtual output current value io3im corresponds to the corrected output current value of the present invention.

Here, the reason why the output current io3 can be controlled from the cross flow target value Icr3ref will be described. The three DC-DC converters are referred to as No. n (n = 1, 2, 3) (in the example of FIG. 1, the first DC-DC converter 11 is No. 1, the second DC-DC converter 21 is No. 2, and the third DC-DC converter 31 is No. 3). It is assumed that the output voltage target value is Voref, the output current of the n-th motor is ion, the cross flow target value of the n-th motor is Icrnref, the droop gain of the n-th motor is kdn, the output voltage detection ratio of the n-th motor is $\alpha$sn, the output current detection ratio of the n-th motor is $\beta$sn, and the load resistance is Ro.

At this time, in the steady state of the three DC-DC converters, the following equation is established.

[Equation 1]

$$\begin{bmatrix} i_{o1} \\ i_{o2} \\ i_{o3} \end{bmatrix} = \begin{bmatrix} R_o + k_{d1} \cdot \beta_{s1} & R_o & R_o \\ R_o & R_o + k_{d2} \cdot \beta_{s2} & R_o \\ R_o & R_o & R_o + k_{d3} \cdot \beta_{s3} \end{bmatrix}^{-1} \cdot \begin{bmatrix} \dfrac{V_{oref}}{\alpha_{s1}} + k_{d1} \cdot I_{cr1} \\ \dfrac{V_{oref}}{\alpha_{s2}} + k_{d2} \cdot I_{cr2} \\ \dfrac{V_{oref}}{\alpha_{s3}} + k_{d3} \cdot I_{cr3} \end{bmatrix}$$

[Equation 2]

$$V_o = R_o \cdot (i_{o1} + i_{o2} + i_{o3})$$

From the above equation, it can be seen that the output current ion can be controlled by the cross flow target value Icrnref. Note that the description here is not limited to the case of n = 3.

This main droop control makes it possible to appropriately control the output currents of the DC-DC converters 11, 21, and 31 that are operated in parallel.

As described for the control system of the third DC-DC converter 31 with reference to FIG. 1, the cross flow target value Icr3ref is generated based on the output voltage value vo, the output current value io3, and the output current target value Io3ref. The cross flow target value Icr3ref is not limited to these pieces of information, and may be generated based on the charged amount (amount of dischargeable electric energy), the charging ratio, or the like of the storage battery 33. In the droop control based on the output current value io3, the output voltage target value droops to Vo2ref1 in accordance with the characteristic line PL, and the third DC-DC converter 31 is subjected to the constant-voltage control so as to achieve the output voltage target value. However, in the main droop control, by using the cross flow target value Icr3ref generated based on the output current target value Io3ref and the like, it is possible to realize more flexible control although the droop control is performed. By determining the cross flow target value Icr3ref so as to increase the output current io3 when the charged amount of the storage battery 33 is large and to decrease the output current io3 when the charged amount of the storage battery 33 is small, it is possible to share the discharge current among the respective storage batteries in a balanced manner, and it is possible to prevent the discharge of a specific storage battery from progressing. When a PV module is connected to the third DC-DC converter 31 as a DC power source, the cross flow target value Icr3ref may be determined such that the third DC-DC converter 31 outputs a large current when the power generated by the PV module is large. In this manner, by determining the cross flow target value Icr3ref in accordance with the state of the DC power source connected to the third DC-DC converter 31, the third DC-DC converter 31 can be droop controlled so as to obtain a desired output current io3.

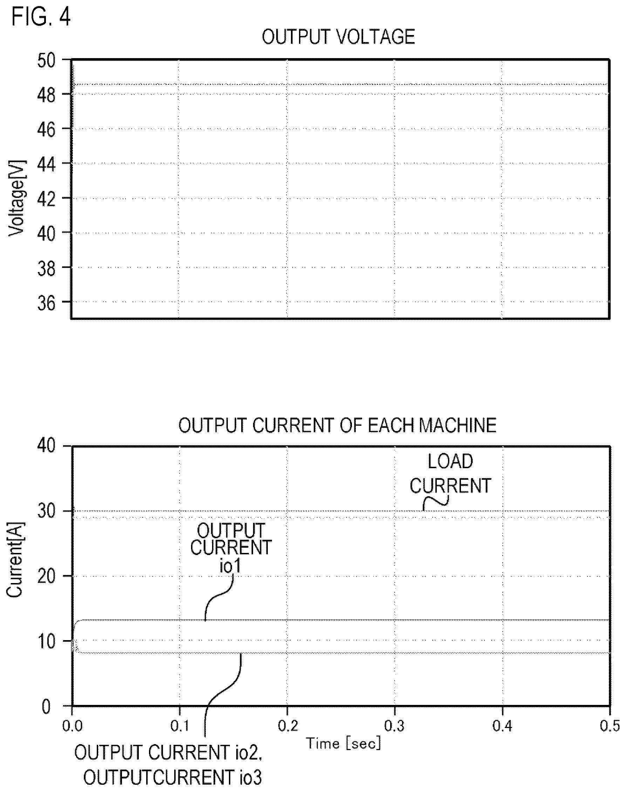

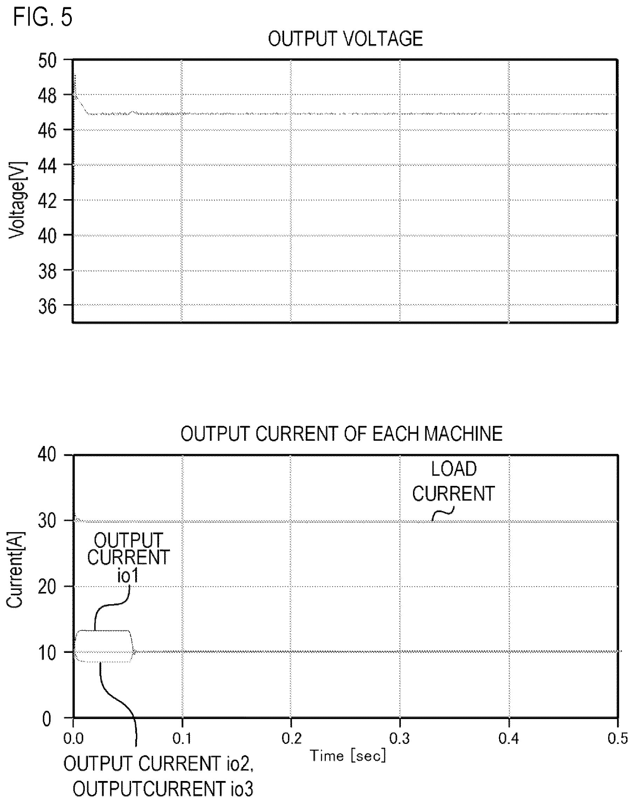

A simulation result by output current control of each of the DC-DC converters 11, 21, and 31 in the DC power supply system 100-1 according to the present example will be described. FIG. 4 illustrates a simulation result of the comparative example, and FIG. 5 illustrates a simulation result of the present example.
Here, it is assumed that the electric capacitances of all the DC-DC converters 11, 21, and 31 are equal, the output voltage detection variation of only the first DC-DC converter 11 is -1%, and the load current value io is 30A. The comparative example illustrates a case where the output current target values are not set for all the DC-DC converters 11, 21, and 31, and the present example illustrates a case where the output current target values Io1ref, Io2ref, and Io3ref obtained by distributing the output current total values based on the above-described power capacity ratio are set for all the DC-DC converters 11, 21, and 31. In each of FIGS. 4 and 5, the horizontal axis represents time (sec), the vertical axis represents the output voltage value (V) in the upper graph, and the vertical axis represents the output current value (A) in the lower graph.

In the simulation result of the comparative example illustrated in FIG. 4, as illustrated in the lower diagram, the DC-DC converters 11, 21, and 31 should respectively output the output current values io1, io2, and io3 equal to 10A, which is one third of the load current value io, but due to the influence of the output voltage detection variation of the first DC-DC converter 11, the output current value io1 exceeds 10A, the output current values io2 and io3 fall below 10A, and the output currents of the DC-DC converters 11, 21, and 31 are unbalanced. In FIG. 4, the output current value io2 and the output current value io3 overlap each other.

On the other hand, in the DC power supply system 100-1 according to the present example illustrated in FIG. 5, the imbalance among the output current values io1, io2, and io3 is eliminated, and all the DC-DC converters 11, 21, and 31 output 10A as the output current values io1, io2, and io3. In FIG. 5, the output current value io2 and the output current value io3 overlap each other.

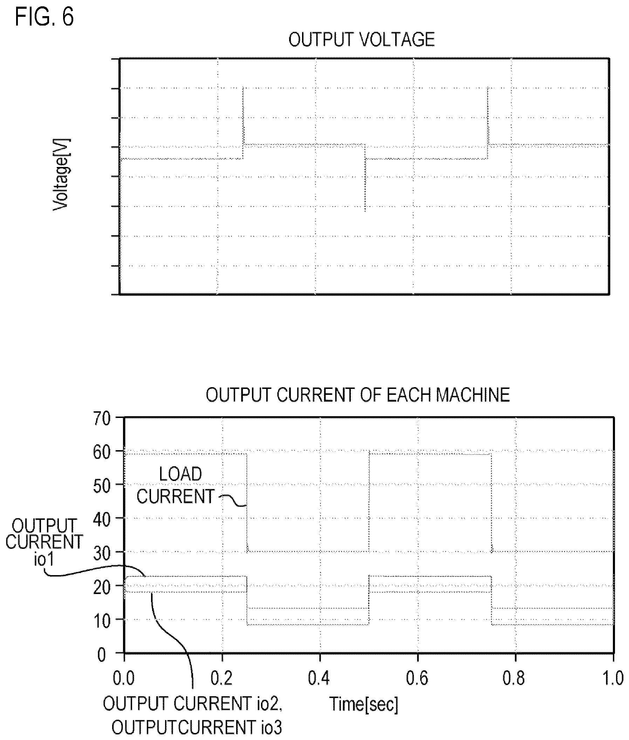

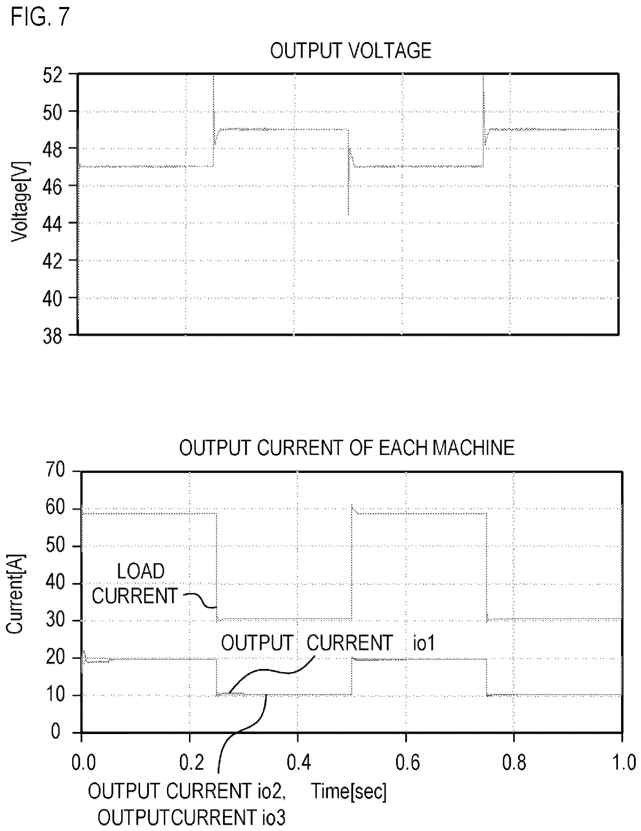

Next, a description will be given of a simulation result in a case where the electric capacitances of all the DC-DC converters 11, 21, and 31 are equal to each other, the output voltage detection variation of only the first DC-DC converter 11 is - 1%, and the load current value io is changed between 30A and 60A every period of 0.25 sec. FIG. 6 illustrates a simulation result of the comparative example, and FIG. 7 illustrates a simulation result of the present example. Here, the comparative example illustrates a case where there are no output current target values for all the DC-DC converters 11, 21, and 31, and the present example illustrates a case where the output current target values io1ref, io2ref, and io3ref obtained by distributing the output current total values based on the above-described power capacity ratio are set for all the DC-DC converters 11, 21, and 31. In FIGS. 6 and 7, the horizontal axis represents time (sec), the upper graph represents the output voltage value with the vertical axis representing voltage (V), and the lower graph represents the output current value with the vertical axis representing current (A).

In the simulation results illustrated in FIG. 6, as can be seen in the lower graph, even with regard to the output current which fluctuates due to load fluctuations, the output current value io1 exceeds 20A and 10A, whereas the output current values io2 and io3 are lower than 20A and 10A, respectively, and the output currents of the DC-DC converters 11, 21, and 31 are unbalanced. In FIG. 6, the output current value io2 and the output current value io3 overlap each other.

On the other hand, in the present example illustrated in FIG. 7, the imbalance of the output current values io1, io2, and io3 is eliminated, and all the DC-DC converters 11, 21, and 31 output a value of 10A or 20A as the output current values io1, io2, and io3 according to the load fluctuation. In FIG. 7, the output current value io2 and the output current value io3 overlap each other.

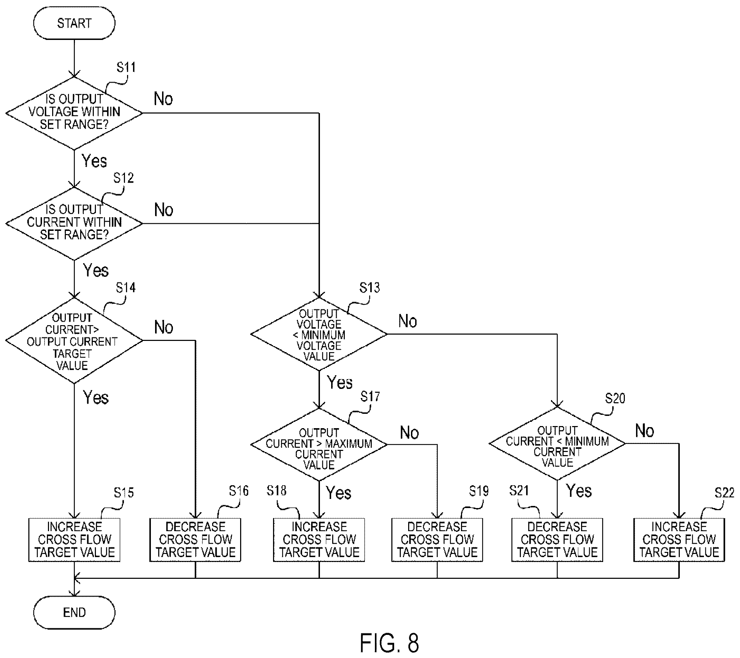

As described above, in the DC power supply system 100-1 including the plurality of DC-DC converters 11, 21, and 31 that perform the main droop control for setting the output current target value, the cross flow target value can be adjusted so that the output voltage falls within the set range. FIG. 8 is a flowchart illustrating a procedure of the cross flow target value adjustment processing. Here, each of the DC-DC converters 11, 21, and 31 executes the process illustrated in the flowchart of FIG. 8. Taking the third DC-DC converter 31 as an example, the third DC-DC converter cross flow target value generator 323 of the control unit 32 generates the cross flow target value Icr3ref. In the cross flow target value adjustment process, each of the DC-DC converters 11, 21, and 31 performs the process based on the output voltage and the output current that can be measured by the DC-DC converter itself. A set range of an output voltage (including a minimum voltage value) and a set range of an output current (including a maximum current value and a minimum current value), which will be described later, are determined by, for example, specifications of the DC-DC converters 11, 21, and 31 to which the storage batteries 13, 23, and 33 are respectively connected. Hereinafter, the cross flow target value adjustment process in the control unit 32 will be described as an example. The cross flow target value adjustment process is similarly applicable to Modified Examples 1 and 2, Example 2, Modified Examples 1 and 2 of Example 2, and other modified examples, which will be described later.

First, the control unit 32 determines whether or not the detected output voltage value vo is within a set range (step S11). Here, the set range of the output voltage value vo corresponds to the predetermined output voltage range of the present invention, and whether or not the output voltage value vo is within the set range and whether or not the output voltage value vo is smaller than the minimum voltage described later correspond to the relationship between the output voltage value and the predetermined voltage value range of the present invention.

If it is determined in step S11 that the output voltage value vo is within the set range, the control unit 32 determines whether or not the detected output current value io3 is within the set range (step S12). The set range of the output current value io3 corresponds to a predetermined output current range of the present invention, and whether or not the output current value io3 described later is within the set range, whether or not the output current value io3 is larger than a maximum current value described later, and whether or not the output current value io3 is smaller than a minimum current value described later correspond to a relationship between the output current value and the predetermined current value range of the present invention.

When it is determined in step S11 that the output voltage value vo is not within the set range, the control unit 32 determines whether or not the output voltage value vo is smaller than the minimum voltage value (step S13).

When it is determined in step S12 that the output current value io3 is within the set range, the control unit 32 determines whether or not the output current value io3 is larger than the output current target value Io3ref (step S14).

When it is determined in step S14 that the output current value io3 is larger than the output current target value Io3ref, the control unit 32 increases the cross flow target value Icr3ref (step S15) and ends the process.

When it is determined in step S14 that the output current value io3 is equal to or less than the output current target value Io3ref, the control unit 32 decreases the cross flow target value Icr3ref (step S16) and ends the process.

If it is determined in step S13 that the output voltage value vo is lower than the minimum voltage value, the control unit 32 determines whether the output current value io3 is higher than the maximum current value (step S17).

When it is determined in step S17 that the output current value io3 is larger than the maximum current value, the control unit 32 increases the cross flow target value Icr3ref (step S18) and ends the process.

When it is determined in step S17 that the output current value io3 is equal to or less than the maximum current value, the control unit 32 decreases the cross flow target value lcr3ref (step S19) and ends the process.

If it is determined in step S13 that the output voltage value vo is equal to or higher than the minimum voltage value, the control unit 32 determines whether the output current value io3 is lower than the minimum current value (step S20).

When it is determined in step S20 that the output current value io3 is smaller than the minimum current value, the control unit 32 decreases the cross flow target value Icr3ref (step S21) and ends the process.

If it is determined in step S20 that the output current value io3 is equal to or greater than the minimum current value, the control unit 32 increases the cross flow target value Icr3ref (step S22) and ends the process.

According to the above-described algorithm, by utilizing the feature of the droop control, when the output voltage is the upper limit value or the lower limit value of the set range, it is determined that the current supply is too small or too large, and by adjusting the cross flow target value, it is possible to realize an equilibrium state that is different from the output current target value but is approximate to the output current target value.

As described above, in the DC power supply system 100-1 according to the present example, the droop control is performed in each of the DC-DC converters 11, 21, and 31 based on the cross flow target values generated based on the output current target values lo1ref, lo2ref, and lo3ref calculated by distributing the output current total values corresponding to the load current values io by the predetermined distribution method, so that it is possible to appropriately control the output current io1, io2, and io3 of each of the DC-DC converters 11, 21, and 31 and suppress the imbalance of the output current.

In Example 1 described above, the DC-DC converters 11, 21, and 31 calculate the output current total values after averaging the detected output current values io1, io2, and io3, respectively, but a load current detection circuit that detects the load current io may be provided, and the load current values io may be distributed by the same distribution method instead of the output current total values to calculate the output current target values lo1ref, lo2ref, and lo3ref. In this case, the output current target value calculation unit 320-1 includes a load current acquisition unit that acquires the load current values from the load current detection circuits, instead of the average processing units 320a, 320b, and 320c and the total value calculation unit 320d (the same modification can be made to Example 2 described below).

Modified Exampled 1

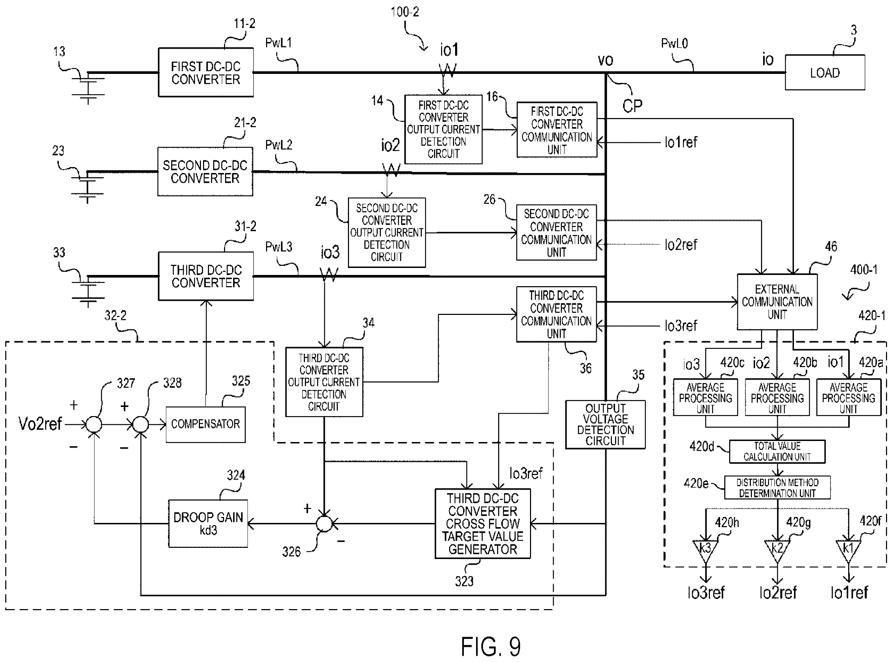

Hereinafter, a DC power supply system 100-2 according to Modified Example 1 of Example 1 will be described with reference to FIG. 9. The same components as those of the DC power supply system 100-1 according to Example 1 are denoted by the same reference numerals, and description thereof will be omitted.

In the DC power supply system 100-1 according to Example 1 described above, the output current target value calculation unit 320 is provided in each of the control units of the first DC-DC converter 11, the second DC-DC converter 21, and the third DC-DC converter 31, but may be provided outside each of the control units. FIG. 9 illustrates a schematic configuration of the DC power supply system 100-2 according to Modified Example 1 of Example 1. The DC power supply system 100-2 is the same as the DC power supply system 100-1 according to Example 1 except that the output current target values lo1ref, lo2ref, and lo3ref are provided from the external device 400-1. The same components as those of the DC power supply system 100-1 are denoted by the same reference numerals, and the description thereof will be omitted.

As illustrated in FIG. 9, in the DC power supply system 100-2 according to Modified Example 1 of Example 1, the output current target value calculation unit 420-1 is provided not in the control unit of each DC-DC converter but in the external device 400-1. In FIG. 9, only the configuration related to the output current target value calculation in the external device 400-1 is illustrated. The external device 400-1 is a device that is communicably connected to the first DC-DC converter 11-2, the second DC-DC converter 21-2, and the third DC-DC converter 31-2 via the external communication unit 46, and the configuration and function thereof are not particularly limited. Here, the DC power supply system 100-2 corresponds to the DC power supply system of the present invention, the first DC-DC converter 11-2, the second DC-DC converter 21-2, and the third DC-DC converter 31-2 correspond to the plurality of power conversion devices of the present invention, and each of them corresponds to the power conversion device of the present invention. In addition, when the third DC-DC converter 31-2 corresponds to the power conversion device of the present invention, the first DC-DC converter 11-2 and the second DC-DC converter 21-2 correspond to another power conversion device of the present invention. The control unit 32-2 corresponds to a control unit of the present invention. The control unit of the first DC-DC converter 11-2 and the control unit of the second DC-DC converter 21-2 also correspond to the control unit of the present invention. Further, the output current target value calculation unit 420-1 corresponds to an output current target value calculation unit of the present invention.

In the external device 400-1, the output current io1 output from the first DC-DC converter output current detection circuit 14 is acquired via the first DC-DC converter communication unit 16 and the external communication unit 46, the output current io2 output from the second DC-DC converter output current detection circuit 24 is acquired via the second DC-DC converter communication unit 26 and the external communication unit 46, and the output current io3 output from the third DC-DC converter output current detection circuit 34 is acquired via the third DC-DC converter communication unit 36 and the external communication unit 46. The functions of an average processing unit 420a, an average processing unit 420b, an average processing unit 420c, a total value calculation unit 420d, a distribution method determination unit 420e, and a calculation execution unit 420h of the output current target value calculation unit 420-1 are the same as those of the average processing unit 320a, the average processing unit 320b, the average processing unit 320c, the total value calculation unit 320d, the distribution method determination unit 320e, and the calculation execution unit 320h of the output current target value calculation unit 320-1 according to Example 1. Here, the coefficient k1 and the coefficient k2 determined in the distribution method determination unit 420e are multiplied by the output current total value in the calculation execution unit 420f and the calculation execution unit 420g, respectively, to calculate the output current target value lo1ref and the output current target value lo2ref, respectively.

The output current target value lo1ref, output current target value lo2ref, and output current target value lo3ref calculated by the output current target value calculation unit 420-1 are input to the first DC-DC converter cross flow target value generator, the second DC-DC converter cross flow target value generator, and the third DC-DC converter cross flow target value generator 323 via the external communication unit 46, and the first DC-DC converter communication unit 16, second DC-DC converter communication unit 26, and third DC-DC converter communication unit 36.

As described above, in the DC power supply system 100-2 according to Modified Example 1, the droop control is performed in each of the DC-DC converters 11-2, 21-2, and 31-2 based on the cross flow target values generated based on the output current target values lo1ref, lo2ref, and lo3ref calculated by distributing the output current total values corresponding to the load current values io by the predetermined distribution method, so that it is possible to appropriately control the output current io1, io2, and io3 of each of the DC-DC converters 11-2, 21-2, and 31-2, and suppress the imbalance of the output current.

Modified Example 2

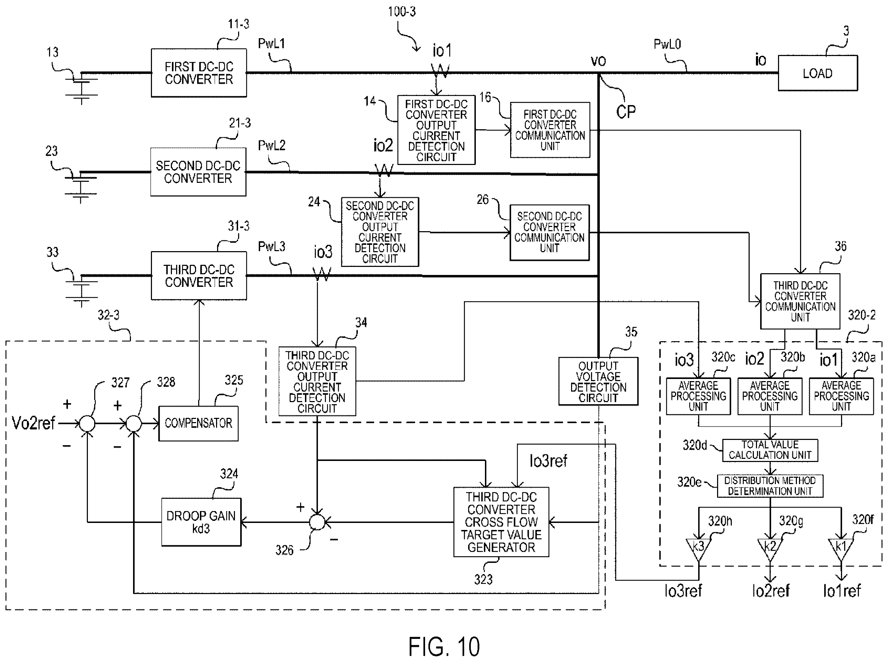

Hereinafter, a DC power supply system 100-3 according to Modified Example 2 of Example 1 will be described with reference to FIG. 10. The same components as those of the DC power supply system 100-1 according to Example 1 are denoted by the same reference numerals, and description thereof will be omitted. In the DC power supply system 100-1 according to Example 1 described above, the output current target value calculation unit 320 is provided in the control unit of each of the first DC-DC converter 11, the second DC-DC converter 21, and the third DC-DC converter 31, but may be provided in the control unit of any one of the DC-DC converters. Although an example in which the output current target value calculation unit 320-2 is provided in the control unit 32-3 of the third DC-DC converter 31-3 will be described here, the output current target value calculation unit may be provided in either the first DC-DC converter 11-3 or the second DC-DC converter 21-3.

The output current target value calculation unit 320-2 calculates an output current target value lo1ref of the first DC-DC converter 11, an output current target value lo2ref of the second DC-DC converter 21, and an output current target value lo3ref of the third DC-DC converter 31 based on the output current value io1, the output current value io2, and the output current value io3. The output current target value calculation unit 320-2 corresponds to the output current target value calculation unit of the present invention.

The configurations of the average processing unit 320a, the average processing unit 320b, the average processing unit 320c, the total value calculation unit 320d, the distribution method determination unit 320e, and the calculation execution unit 320h of the output current target value calculation unit 320-2 are the same as those of Example 1. The output current target value calculation unit 320-2 further multiplies the output current total value by the coefficient k1 and the coefficient k2 determined by the distribution method determination unit 320e in the calculation execution unit 320f and the calculation execution unit 320g, respectively, to calculate the output current target value lo1ref and the output current target value lo2ref.

The output current target value lo1ref and output current target value lo2ref calculated by the output current target value calculation unit 320-2 are input to the first DC-DC converter cross flow target value generator and the second DC-DC converter cross flow target value generator via the third DC-DC converter communication unit 36, and the first DC-DC converter communication unit 16 and second DC-DC converter communication unit 26, respectively. The output current target value lo3ref calculated by the output current target value calculation unit 320-2 is input to the third DC-DC converter cross flow target value generator 323. The processing for the input output current target value lo1ref, input output current target value lo2ref, and input output current target value lo3ref is the same as that in Example 1, and a description thereof will be omitted. Here, the DC power supply system 100-3 corresponds to the DC power supply system of the present invention, and the first DC-DC converter 11-3, the second DC-DC converter 21-3, and the third DC-DC converter 31-3 correspond to the plurality of power conversion devices of the present invention, and each corresponds to the power conversion device of the present invention. In addition, when the third DC-DC converter 31-3 corresponds to the power conversion device of the present invention, the first DC-DC converter 11-3 and the second DC-DC converter 21-3 correspond to another power conversion device of the present invention. The control unit 32-3 corresponds to the control unit of the present invention. The control unit of the first DC-DC converter 11-2 and the control unit of the second DC-DC converter 21-2 also correspond to the control unit of the present invention. Further, the output current target value calculation unit 320-3 corresponds to the output current target value calculation unit of the present invention.

As described above, in the DC power supply system 100-3 according to Modified Example 2, the droop control is performed in each of the DC-DC converters 11-3, 21-3, and 31-3 based on the cross flow target values generated based on the output current target values lo1ref, lo2ref, and lo3ref calculated by distributing the output current total values corresponding to the load current values io by the predetermined distribution method, so that it is possible to appropriately control the output current io1, io2, and io3 of each of the DC-DC converters 11-3, 21-3, and 31-3, and suppress the imbalance of the output current.

Example 2

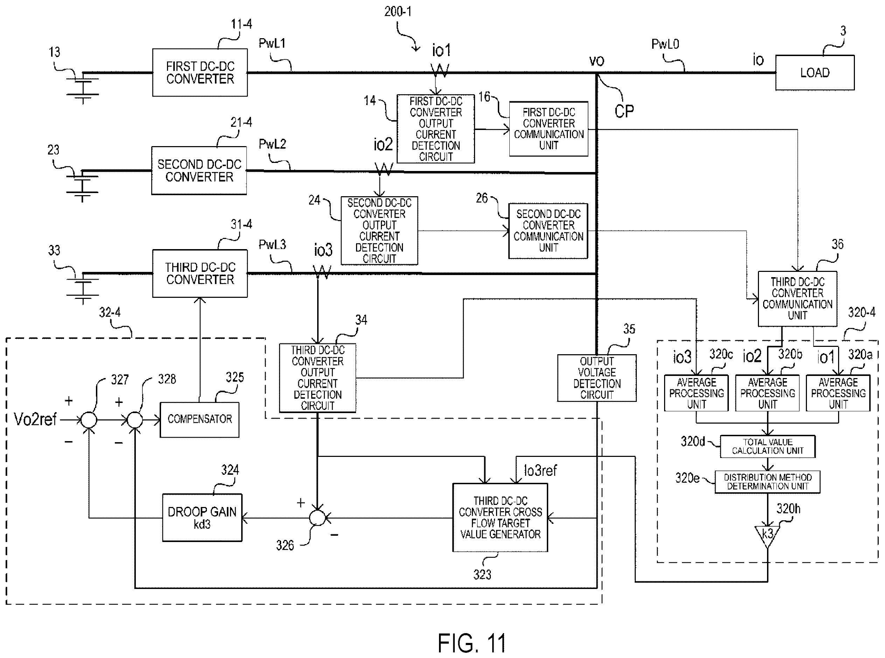

Hereinafter, a DC power supply system 200-1 according to Example 2 of the present invention will be described. FIG. 11 is a diagram illustrating a schematic configuration of a first DC-DC converter 11-4, a second DC-DC converter 21-4, a third DC-DC converter 31-4, and a control unit 32-4 that constitute a DC power supply system 200-1 according to Example 2 of the present invention. The same components as those in Example 1 are denoted by the same reference numerals, and a detailed description thereof will be omitted.

The DC power supply system 200-1 sets output current target values lo2ref and lo3ref for the second DC-DC converter 21-4 and the third DC-DC converter 31-4, similar to the DC power supply system 100-1 of Example 1, but does not set an output current target value lo1ref for the first DC-DC converter 11-4.

Therefore, the block configuration of the output current target value calculation unit 320-4 is also different from that of the output current target value calculation unit 320-1. In the output current target value calculation unit 320-4, output current values io1, io2, and io3 are obtained from each DC-DC converter 11-4, 21-4, and 31-4, averaging is performed in average processing units 320a, 320b, and 320c, and these are summed in a total value calculation unit 320d, which is the same as the output current target value calculation unit 320-1 according to Example 1. The output current target value calculation unit 320-4 determines only a coefficient for calculating the output current target value lo3ref by the distribution method determined by the distribution method determination unit 320e. For example, $k3 = P3/(P1 + P2 + P3)$ is calculated by the method of distributing the output current total value according to the power capacity ratio of each of the DC-DC converters 11, 21, and 31 described in Example 1. Then, the calculation execution unit 320h calculates the output current target value lo3ref by multiplying the output current total value by the coefficient k3. Although not illustrated in FIG. 11, the second DC-DC converter 21 also includes an output current target value calculation unit having the same configuration as that of the output current target value calculation unit 320-4 except for the calculation execution unit 320h. The output current target value calculation unit of the second DC-DC converter 21 determines only a coefficient for calculating the output current target value lo2ref by the distribution method determined by the distribution method determination unit 320e. For example, $k2 = P2/(P1 + P2 + P3)$ is calculated by the method of distributing the output current total value according to the power capacity ratio of each of the DC-DC converters 11, 21, and 31 described in Example 1. Then, the calculation execution unit 320g calculates the output current target value lo2ref by multiplying the output current total value by the coefficient k2.

Here, the first DC-DC converter 11-4 corresponds to the second type power conversion device of the present invention, and the second DC-DC converter 21-4 and the third DC-DC converter 31-4 correspond to the plurality of first type power conversion devices of the present invention. Further, the storage batteries 23 and 33 correspond to a first type DC power supply of the present invention, and the storage battery 13 corresponds to one or more second type DC power supplies of the present invention. The second DC-DC converter output current detection circuit 24 and the third DC-DC converter output current detection circuit 34 correspond to a first type output current value acquisition unit of the present invention, and the first DC-DC converter output current detection circuit 14 corresponds to a second type output current value acquisition unit of the present invention. The output current (values) io2 and io3 correspond to a first type output current (value) of the present invention, and the output current value io1 corresponds to a second type output current (value) of the present invention. Further, the output voltage detection circuit 35 and the corresponding configuration of the second DC-DC converter 21-4 correspond to a first type output voltage value acquisition unit of the present invention, and the configuration of the first DC-DC converter 11-4 corresponding to the output voltage detection circuit 35 corresponds to a second type output voltage value acquisition unit of the present invention. Further, the output voltage value vo corresponds to a first output voltage value and a second type output voltage value of the present invention. Further, the control unit 32 and the corresponding configuration of the second DC-DC converter 21-4 correspond to a first type control unit of the present invention, and the configuration corresponding to the control unit included in the first DC-DC converter 11-4 corresponds to a second type control unit of the present invention. The output current target values lo2ref and lo3ref correspond to a first type output current target value of the present invention. Further, the droop gain multiplier

**EP 4 633 022 A1**

324, the addition point 327, and the corresponding configuration of the second DC-DC converter 21-4 correspond to a first type droop control unit of the present invention, and the droop gain multiplier 324 and the corresponding configuration of the addition point 327 included in the first DC-DC converter 11-4 correspond to a second type droop control unit of the present invention. The cross flow target values Icr3ref and Icr2ref correspond to the first type output current correction values of the present invention. The difference obtained by subtracting the cross flow target value Icr3ref from the output current value io3 (i.e., the virtual output current value io3im) and the difference obtained by subtracting the cross flow target value Icr2ref from the output current value io2 (i.e., the virtual output current value io2im) correspond to the first type corrected output current value of the present invention. Further, the output voltage target values vo2ref and vo3ref correspond to a first type output voltage target value of the present invention, and the output voltage target value vo1ref corresponds to a second type output voltage target value of the present invention.

The output current target value Io3ref calculated by the output current target value calculation unit 320-4 is input to the third DC-DC converter cross flow target value generator 323. Similarly, the output current target value Io2ref calculated by the output current target value calculation unit of the second DC-DC converter 21 is input to the second DC-DC converter 21 cross flow target value generator of. In the second DC-DC converter 21-4 and the third DC-DC converter 31-4, the droop control similar to that of Example 1 is performed.

When the configuration of the first DC-DC converter 11-4 that does not set the output current target value Io1ref is described with reference to the configuration of the third DC-DC converter 31-4 in FIG. 11, the first DC-DC converter 11-4 does not include configurations corresponding to the third DC-DC converter cross flow target value generator 323 and the addition point 236 (and does not include a configuration corresponding to the output current target value calculation unit 320-4). The output voltage value vo output from the configuration corresponding to the output voltage detection circuit 35 is input only to the configuration corresponding to the addition point 328. The output current value io1 output from the configuration corresponding to the third DC-DC converter output current detection circuit 34 (the first DC-DC converter output current detection circuit 14) is directly multiplied by the droop gain kd1 without passing through the configuration corresponding to the addition point 326, and is input to the configuration corresponding to the addition point 327. The first DC-DC converter 11-4 has the same configuration as the addition points 327 and 328 and the compensator 325.

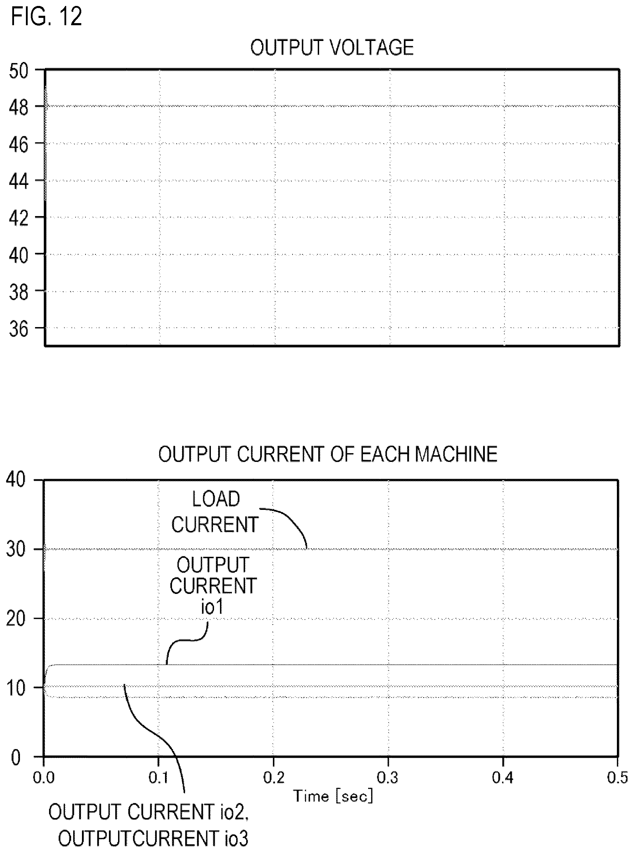

A simulation result by the output current control of each of the DC-DC converters 11-4, 21-4, and 31-4 in the DC power supply system 200-1 according to Example 2 will be described. FIG. 12 illustrates the simulation result of the comparative example, and FIG. 11 illustrates the simulation result of Example 2. Since the configuration of the graph illustrating the simulation result is the same as that of Example 1, the description thereof will be omitted.

Here, it is assumed that all the DC-DC converters 11-4, 21-4, and 31-4 have the same electric capacitance, and only the first DC-DC converter 11-4 has an output voltage detection variation of -1% and a load current value io of 30A. The comparative example illustrates a case where the output current target values are not set for all of the DC-DC converters 11-4, 21-4, and 31-4, and the present example illustrates a case where the output current target value is not set for the first DC-DC converter 11-4, and the output current target values Io1ref, Io2ref, and Io3ref obtained by distributing the output current total value based on the above-described power capacity ratio are set for the second DC-DC converter 21-4 and the third DC-DC converter 31-4.

In the simulation result of the comparative example illustrated in FIG. 12, as can be seen in the lower diagram, each of the DC-DC converters 11-4, 21-4, and 31-4 should output the output current values io1, io2, and io3 equal to 10A, which is one third of the load current value io, but due to the influence of the output voltage detection variation of the first DC-DC converter 11-4, the output current value io1 exceeds 10A, the output current values io2 and io3 fall below 10A, and the output current values io1, io2, and io3 of the DC-DC converters 11-4, 21-4, and 31-4 are unbalanced. In FIG. 12, the output current value io2 and the output current value io3 overlap each other.

On the other hand, in the DC power supply system 200-2 according to Example 2 illustrated in FIG. 11, the output current values io1, io2, and io3 are initially unbalanced, but the imbalance among the output current values io1, io2, and io3 is eliminated after a certain period of time, and all of the DC-DC converters 11-4, 21-4, and 31-4 output 10A as the output current values io1, io2, and io3. In FIG. 11, the output current value io2 and the output current value io3 overlap each other.

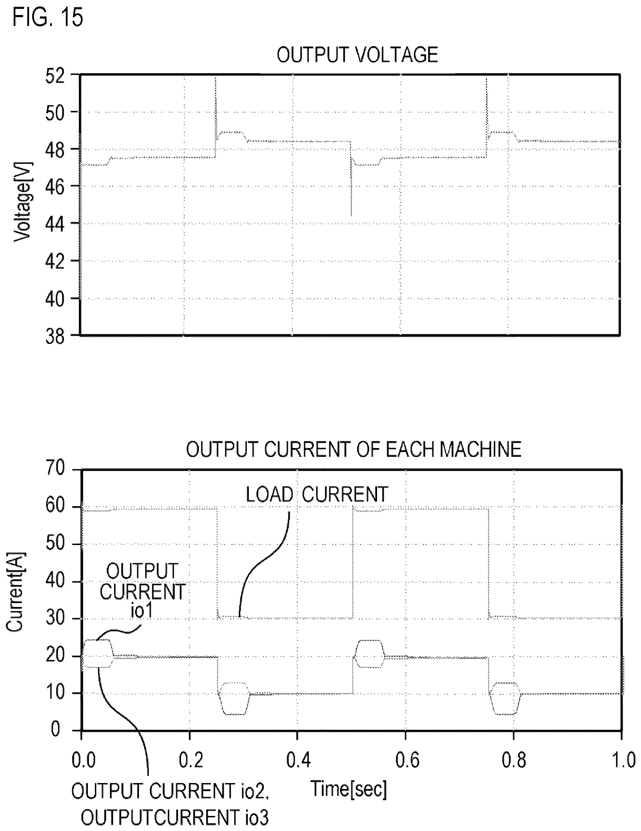

Next, a description will be given of a simulation result in a case where the electric capacitances of all the DC-DC converters 11-4, 21-4, and 31-4 are equal to each other, the output voltage detection variation of only the first DC-DC converter 11 is -1%, and the load current value io is changed between 30A and 60A every period of 0.25 sec. FIG. 12 illustrates a simulation result of the comparative example, and FIG. 15 illustrates a simulation result of the DC power supply system 200 according to Example 2. Here, the comparative example illustrates a case where there are no output current target values for all the DC-DC converters 11-4, 21-4, and 31-4, and the present example illustrates a case where the output current target value is not set for the first DC-DC converter 11-4, and the output current target values io2ref and the io3ref obtained by distributing the output current total value based on the power capacity ratio are set for the second DC-DC converter 21-4 and third DC-DC converter 31-4.

In the simulation results illustrated in FIG. 12, as can be seen in the lower graph, even with regard to the output current which fluctuates due to load fluctuations, the output current value io1 exceeds 20A and 10A, whereas the output current values io2 and io3 are lower than 20A and 10A, respectively, and the output currents of the DC-DC converters 11-4, 21-4, and 31-4 are unbalanced. In FIG. 12, the output current value io2 and the output current value io3 overlap each other.

On the other hand, in the DC power supply system 200 according to Example 2 illustrated in FIG. 15, the imbalance among the output current values io1, io2, and io3 is eliminated, and all of the DC-DC converters 11-4, 21-4, and 31-4 output a value of 10A or 20A as the output current values io1, io2, and io3 in accordance with the load fluctuation. In FIG. 15, the output current value io2 and the output current value io3 overlap each other.

As described above, in the DC power supply system 200 according to Example 2, the droop control is performed in the second DC-DC converter 21-4 and the third DC-DC converter 31-4 based on the cross flow target value generated based on the output current target values lo2ref and lo3ref calculated by distributing the output current total value corresponding to the load current value io using a predetermined distribution method, so that even in the case of parallel operation including the first DC-DC converter 11-4, in which droop control is performed without setting an output current target value, the output currents io1, io2, and io3 of the DC-DC converters 11-4, 21, and 31-4 can be appropriately controlled to suppress imbalance in the output current.

In the DC power supply system, the DC-DC converter that does not set the output current target value (the first DC-DC converter 11 in Example 2) can be determined, for example, based on the amount of power suppliable to the load as follows.

(1) When the power capacities of the plurality of DC-DC converters 11-4 and the like are different, the output current target value is not set for the DC-DC converter having the largest power capacity.
(2) When the power capacities of the plurality of DC-DC converters 11-4 and the like are equal, the output current target value is not set for the DC-DC converter having the highest efficiency.
(3) When the DC power supply is a storage battery, the output current target value is not set for the DC-DC converter having the highest storage battery capacity * charging efficiency.

The method of determining the DC-DC converter in which the output current target value is not set is not limited to the above-described example.

Modified Example 1

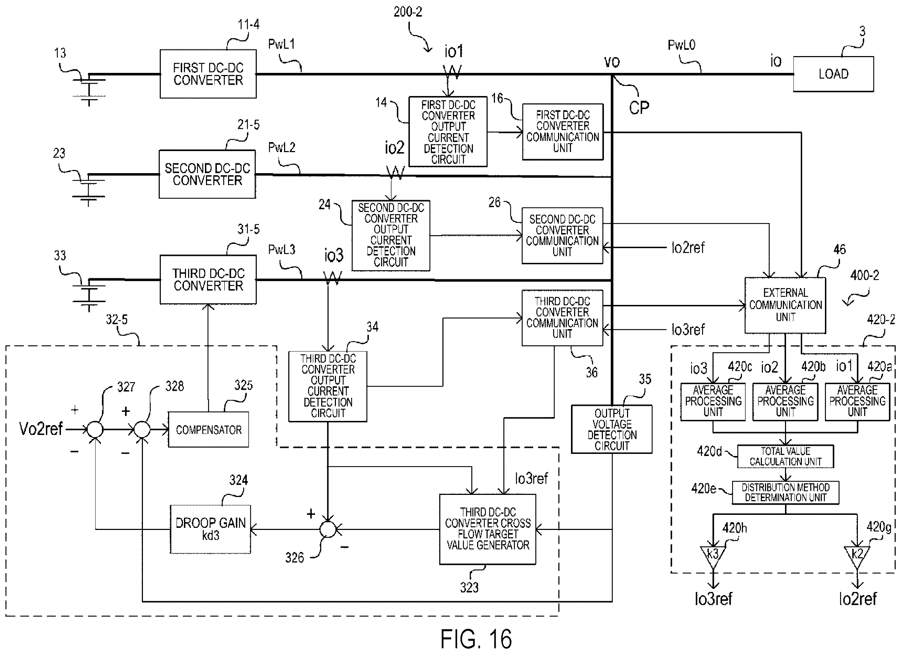

In the DC power supply system 200-1 according to Example 2 described above, the output current target value calculation unit 320-4 is provided in the control unit 32-4 of the third DC-DC converter 31-4, and the output current target value calculation unit having the same configuration is provided in the control unit of the second DC-DC converter 21, but they may be provided outside these control units. FIG. 16 illustrates a schematic configuration of a DC power supply system 200-2 according to Modified Example 1 of Example 2. The DC power supply system 200-2 is the same as the DC power supply system 200-1 according to Example 2 except that the output current target values lo2ref and lo3ref are provided from an external device 400-2. The same components as those of the DC power supply system 200-1 are denoted by the same reference numerals, and description thereof is omitted.

As illustrated in FIG. 16, in the DC power supply system 200-2 according to Modified Example 1 of Example 2, the output current target value calculation unit 420-2 is provided not in the control unit 32-6 of the third DC-DC converter 31-6 and the control unit of the second DC-DC converter 21, but in the external device 400-2. In FIG. 16, only the configuration related to the output current target value calculation in the external device 400-2 is illustrated. The external device 400-2 is a device that is communicably connected to the first DC-DC converter 11-3, the second DC-DC converter 21-3, and the third DC-DC converter 31-3 via the external communication unit 46, and the configuration and function thereof are not particularly limited.

In the external device 400-2, the output current io1 output from the first DC-DC converter output current detection circuit 14 is acquired via the first DC-DC converter communication unit 16 and the external communication unit 46, the output current io2 output from the second DC-DC converter output current detection circuit 24 is acquired via the second DC-DC converter communication unit 26 and the external communication unit 46, and the output current io3 output from the third DC-DC converter output current detection circuit 34 is acquired via the third DC-DC converter communication unit 36 and the external communication unit 46. The functions of an average processing unit 420a, an average processing unit 420b, an average processing unit 420c, a total value calculation unit 420d, a distribution method determination unit 420e, and a calculation execution unit 420h of the output current target value calculation unit 420-2 are the same as those of the average processing unit 420a, the average processing unit 420b, the average processing unit 420c, the total value calculation unit 420d, the distribution method determination unit 420e, and the calculation execution units 420g and 420h of the output current target value calculation unit 420-1 according to Modified Example 1 of Example 1. However, the output current target value calculation unit 420-2 does not include the calculation execution unit 420f that calculates the output current target value lo1ref of the first DC-DC converter 11, and does not output the output current target value lo1ref. Here, the first DC-DC converter 11-4 corresponds to the second type power conversion device of the present invention, and the second DC-DC converter 21-6 and the third DC-DC converter 31-6 correspond to the plurality of first type power conversion devices of the present invention. The second DC-DC converter output current detection circuit 24 and the third DC-DC converter output current detection circuit 34 correspond to a first type output current value acquisition unit of the present invention, and the first DC-DC converter output current detection circuit 14 corresponds to a second type output current value acquisition unit of the present invention. The output current (values) io2 and io3 correspond to a first type output current (value) of the present invention, and the output current value io1 corresponds to a second type output current (value) of the present invention. The output voltage detection circuit 35 and the corresponding configuration of the second DC-DC converter 21-6 correspond to a first type output voltage value acquisition unit of the present invention, and the configuration of the first DC-DC converter 11-4 corresponding to the output voltage detection circuit 35 corresponds to a second type output voltage value acquisition unit of the present invention. Further, the output voltage value vo corresponds to a first output voltage value and a second type output voltage value of the present invention. Further, the control unit 32-5 and the corresponding configuration of the second DC-DC converter 21-6 correspond to a first type control unit of the present invention, and the configuration corresponding to the control unit included in the first DC-DC converter 11-4 corresponds to a second type control unit of the present invention. The output current target values lo2ref and lo3ref correspond to a first type output current target value of the present invention. Further, the droop gain multiplier 324, the addition point 327, and the corresponding configuration of the second DC-DC converter 21-4 correspond to a first type droop control unit of the present invention, and the droop gain multiplier 324 and the corresponding configuration of the addition point 327 included in the first DC-DC converter 11-4 correspond to a second type droop control unit of the present invention. The cross flow target values Icr3ref and Icr2ref correspond to the first type output current correction values of the present invention. The difference obtained by subtracting the cross flow target value Icr3ref from the output current value io3 (i.e., the virtual output current value io3im) and the difference obtained by subtracting the cross flow target value Icr2ref from the output current value io2 (i.e., the virtual output current value io2im) correspond to the first type corrected output current value of the present invention. Further, the output voltage target values vo2ref and vo3ref correspond to a first type output voltage target value of the present invention, and the output voltage target value vo1ref corresponds to a second type output voltage target value of the present invention.

The output current target value lo2ref and output current target value lo3ref calculated by the output current target value calculation unit 420-2 are input to the second DC-DC converter cross flow target value generator and the third DC-DC converter cross flow target value generator 323 via the external communication unit 46, the second DC-DC converter communication unit 26, and the third DC-DC converter communication unit 36, respectively.

As described above, in a DC power supply system 200-3 according to Modified Example 2, the droop control is performed in the second DC-DC converter 21-6 and the third DC-DC converter 31-6 based on the cross flow target value generated based on the output current target values lo2ref and lo3ref calculated by distributing the output current total value corresponding to the load current value io using a predetermined distribution method, so that even in the case of parallel operation including the first DC-DC converter 11-4, in which droop control is performed without setting an output current target value, the output currents io1, io2, and io3 of the DC-DC converters 11-4, 21-6, and 31-6 can be appropriately controlled to suppress imbalance in the output current.

Modified Example 2

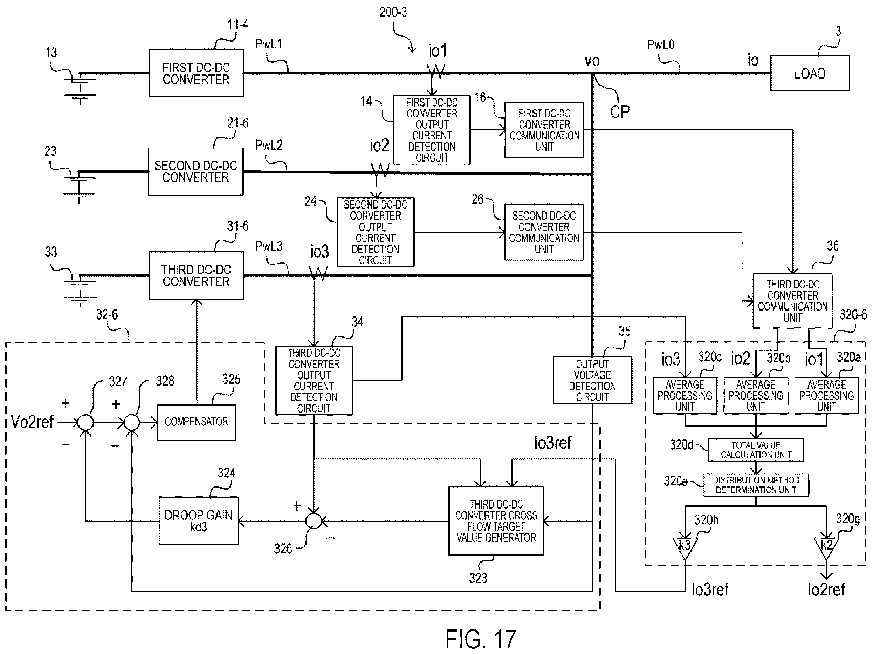

Hereinafter, the DC power supply system 200-2 according to Modified Example 2 of Example 2 will be described with reference to FIG. 17. The same components as those of the DC power supply system 200-1 according to Example 2 are denoted by the same reference numerals, and the description thereof is omitted.
In the DC power supply system 200-1 according to Example 2 described above, the output current target value calculation unit 320-2 is provided in the third DC-DC converter 31-2, and an output current target value calculation unit having the same configuration is provided in the second DC-DC converter 21.

As described above, the output current target value calculation unit may be provided only in the third DC-DC converter 31, instead of being provided in each of the second DC-DC converter 21 and the third DC-DC converter 31. FIG. 17 illustrates a schematic configuration of the DC power supply system 200-3 according to Modified Example 2 of Example 2. The output current target value lo2ref of the second DC-DC converter 21 calculated by the output current target value calculation unit 320-6 is input from the third DC-DC converter communication unit 36 to the second DC-DC converter cross flow target value generator via the second DC-DC converter communication unit 26. Then, the output current target value lo3ref of the third DC-DC converter 31-2 is input to the third DC-DC converter cross flow target value generator 323.
In output current target value calculation unit 320-6 according to Modified Example 2, with respect to the output current value io1, the output current value io2, and the output current value io3 averaged in the average processing unit 320c, the average processing unit 320b, and the average processing unit 320c, respectively, the total value calculation unit 320d calculates the output current total value, the distribution method determination unit 320e determines the coefficient k3 for distributing the output current total value by multiplying the output current total value, and the calculation execution unit 320h outputs the calculated output current target value lo3ref to the third DC-DC converter cross flow target value generator 323. Similarly, the distribution method determination unit 320e determines the coefficient k2 for distributing the output current total value by multiplying the output current total value, and outputs the output current target value lo2ref calculated by the calculation execution unit 320g to the cross flow target value generator of the second DC-DC converter 21-6 via the third DC-DC converter communication unit 36 and the second DC-DC converter communication unit 26.

Here, the first DC-DC converter 11-4 corresponds to the second type power conversion device of the present invention, and the second DC-DC converter 21-6 and the third DC-DC converter 31-6 correspond to the plurality of first type power conversion devices of the present invention. The second DC-DC converter output current detection circuit 24 and the third DC-DC converter output current detection circuit 34 correspond to a first type output current value acquisition unit of the present invention, and the first DC-DC converter output current detection circuit 14 corresponds to a second type output current value acquisition unit of the present invention. The output current (values) io2 and io3 correspond to a first type output current (value) of the present invention, and the output current value io1 corresponds to a second type output current (value) of the present invention. The output voltage detection circuit 35 and the corresponding configuration of the second DC-DC converter 21-6 correspond to a first type output voltage value acquisition unit of the present invention, and the configuration of the first DC-DC converter 11-4 corresponding to the output voltage detection circuit 35 corresponds to a second type output voltage value acquisition unit of the present invention. Further, the output voltage value vo corresponds to a first output voltage value and a second type output voltage value of the present invention. Further, the control unit 32-6 and the corresponding configuration of the second DC-DC converter 21-6 correspond to a first type control unit of the present invention, and the configuration corresponding to the control unit included in the first DC-DC converter 11-4 corresponds to a second type control unit of the present invention. The output current target values lo2ref and lo3ref correspond to a first type output current target value of the present invention. Further, the droop gain multiplier 324, the addition point 327, and the corresponding configuration of the second DC-DC converter 21-6 correspond to a first type droop control unit of the present invention, and the droop gain multiplier 324 and the corresponding configuration of the addition point 327 included in the first DC-DC converter 11-4 correspond to a second type droop control unit of the present invention. The cross flow target values Icr3ref and Icr2ref correspond to the first type output current correction values of the present invention. The difference obtained by subtracting the cross flow target value Icr3ref from the output current value io3 (i.e., the virtual output current value io3im) and the difference obtained by subtracting the cross flow target value Icr2ref from the output current value io2 (i.e., the virtual output current value io2im) correspond to the first type corrected output current value of the present invention. Further, the output voltage target values vo2ref and vo3ref correspond to a first type output voltage target value of the present invention, and the output voltage target value vo1ref corresponds to a second type output voltage target value of the present invention.

As described above, in a DC power supply system 200-3 according to Modified Example 2, the droop control is performed in the second DC-DC converter 21-6 and the third DC-DC converter 31-6 based on the cross flow target value generated based on the output current target values lo2ref and lo3ref calculated by distributing the output current total value corresponding to the load current value io using a predetermined distribution method, so that even in the case of parallel operation including the first DC-DC converter 11-4, in which droop control is performed without setting an output current target value, the output currents io1, io2, and io3 of the DC-DC converters 11-4, 21-6, and 31-6 can be appropriately controlled to suppress imbalance in the output current.

Other Modified Examples

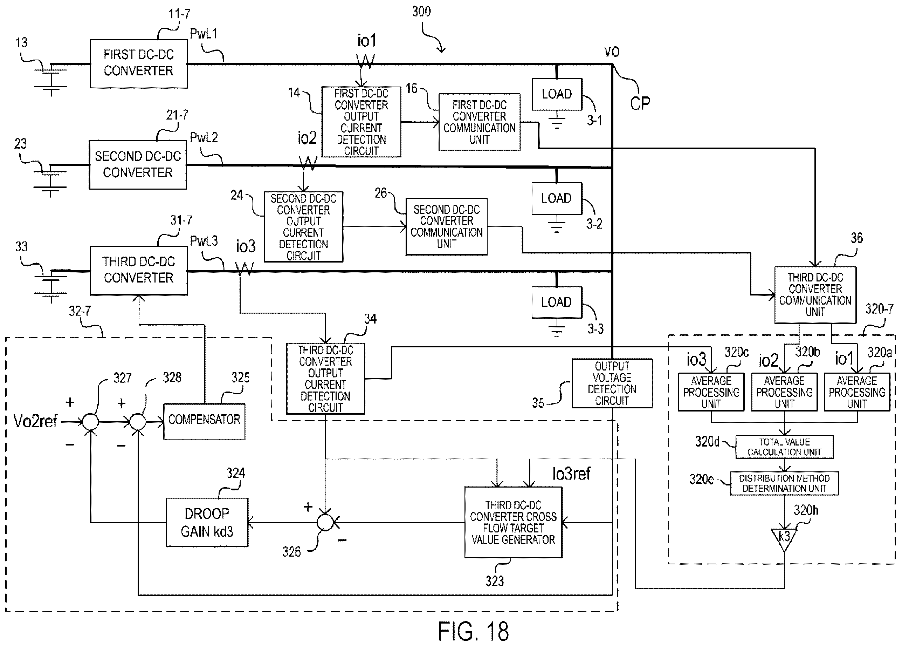

Hereinafter, a DC power supply system 300 according to another modified example of the present invention will be described. FIG. 18 is a diagram illustrating a schematic configuration of a first DC-DC converter 11-7, a second DC-DC converter 21-7, a third DC-DC converter 31-7, and a control unit 32-7 constituting a DC power supply system 300 according to a modified example of the present invention. The same components as those in Example 1 are denoted by the same reference numerals, and a detailed description thereof will be omitted. The present modified example is applicable not only to Example 1 but also to Modified Examples 1 and 2 of Example 1, Example 2, and Modified Examples 1 and 2 of Example 2.

In the DC power supply system 300, the first DC-DC converter 11-7, the second DC-DC converter 21-7, and the third DC-DC converter 31-7 are connected in parallel to the connection point CP, but the loads are connected in a distributed manner such as the first load 3-1, the second load 3-2, and the third load 3-3. The first load 3-1 is connected to the output line PwL1, the second load 3-2 is connected to the output line PwL2, and the third load 3-3 is connected to the output line PwL3. The output line PwL1, the output line PwL2, and the output line PwL3 are connected to the connection point CP. In the DC power supply system 300 to which the first load 3-1, the second load 3-2, and the third load 3-3 distributed as described above are connected, the first DC-DC converter 11-7, the second DC-DC converter 21-7, and the third DC-DC converter 31-7 are configured in the same manner as the first DC-DC converter 11, the second DC-DC converter 21, and the third DC-DC converter 31 according to Example 1, and droop control in which the output current target values io1, io2, and io3 are set is performed, so that it is possible to appropriately control the output currents io1, io2, and io3 of the DC-DC converters 11-7, 21-7, and 31-7 and suppress the imbalance of the output current. Here, the first load 3-1, the second load 3-2, and the third load 3-3 correspond to the load of the present invention.

EP 4 633 022 A1

Note that the configurations of the above-described examples can be combined as much as possible without departing from the object and the technical idea of the present invention. For example, in the above-described examples, an example in which the present invention is applied to a DC power supply system including a storage battery as a distributed power source has been described, but the present invention can be applied to a DC power supply system including a photovoltaic power generation module as a distributed power source. In addition, the present invention can also be applied to a DC power supply system using energy of a fuel cell module, a gas engine module, a wind power generation module, a tidal power generation module, a hydraulic power generation module, a geothermal power generation module, or the like, or a combination thereof, instead of the solar power generation module.

Supplementary Note 1

A power conversion device (31) configured to step-up, step-up/step-down, or step-down DC power input from a DC power supply (33) and output the DC power, the power conversion device being connected to a load (3) in parallel with another power conversion device (11, 21) configured to step-up, step-up/step-down, or step-down DC power input from another DC power supply (13, 23) and output the DC power, the power conversion device (31) including:

an output current value acquisition unit (34) configured to acquire an output current value (io3) output from the power conversion device (31);
an output voltage value acquisition unit (35) configured to acquire an output voltage value (vo) output from the power conversion device (31); and
a control unit (32) configured to control an output voltage output from the power conversion device (31), wherein the control unit (32) includes:

a correction value generation unit (323) configured to generate an output current correction value (io3im) for correcting the output current value (io3) based on an output current target value (io3ref) and the output current value (io3), the output current target value being a target value of an output current (io3) output from the power conversion device (31) and being calculated by distributing, to the power conversion device (31) and the other power conversion device (11, 21), a sum of the output current value and another output current value output (io1, io2) from the other power conversion device (11, 21) or a load current value input to the load (3) according to a predetermined distribution method; and
a droop control unit (324, 327) configured to droop an output voltage target value (Vo3ref), which is a target value of the output voltage (vo) output from the power conversion device (31), based on a corrected output current value (io3im), which is the output current value corrected by the output current correction value (Icr3ref), and the control unit controls the output voltage based on the output voltage target value drooped (Vo3ref) and the output voltage value (vo).

REFERENCE SIGNS

3: Load
11: First DC-DC converter
21: Second DC-DC converter
31: Third DC-DC converter
32: Control unit
323: Third DC-DC converter cross flow target value generator
324: Droop gain multiplication unit
326, 327: Addition point
100: DC power supply system

**Claims**

**1.** A power conversion device configured to step-up, step-up/step-down, or step-down DC power input from a DC power supply and output the DC power, the power conversion device being connected to a load in parallel with another power conversion device configured to step-up, step-up/step-down, or step-down DC power input from another DC power supply and output the DC power, the power conversion device comprising:

an output current value acquisition unit configured to acquire an output current value output from the power conversion device;

an output voltage value acquisition unit configured to acquire an output voltage value output from the power conversion device; and

a control unit configured to control an output voltage output from the power conversion device, wherein
the control unit includes:

a correction value generation unit configured to generate an output current correction value for correcting the output current value based on an output current target value and the output current value, the output current target value being a target value of an output current output from the power conversion device and being calculated by distributing, to the power conversion device and the other power conversion device, a sum of the output current value and another output current value output from the other power conversion device or a load current value input to the load according to a predetermined distribution method; and

a droop control unit configured to droop an output voltage target value, which is a target value of the output voltage output from the power conversion device, based on a corrected output current value, which is the output current value corrected by the output current correction value, and
the control unit controls the output voltage based on the output voltage target value drooped and the output voltage value.

2. The power conversion device according to claim 1, further comprising:

a communication unit configured to receive at least the output current value of the other power conversion device or the load current value; and

an output current target value calculation unit configured to calculate at least the output current target value by distributing, to the power conversion device and the other power conversion device, the sum of the output current value and the other output current value or the load current value according to the distribution method.

3. The power conversion device according to claim 1, further comprising:
a communication unit configured to transmit the output current value to the other power conversion device or an external device including an output current target value calculation unit configured to calculate at least the output current target value by distributing, to the power conversion device and the other power conversion device, the sum of the output current value and the other output current value or the load current value according to the distribution method, and receive the output current target value calculated by the output current target value calculation unit from the other power conversion device or the external device.

4. The power conversion device according to claim 1, wherein
the correction value generation unit adjusts the output current correction value based on a difference between the output current target value and the output current value.

5. The power conversion device according to claim 1, wherein
the correction value generation unit increases or decreases the output current correction value in accordance with a relationship between the output voltage value and a predetermined voltage value range and a relationship between the output current value and a predetermined current value range.

6. A DC power supply system comprising:

a plurality of power conversion devices configured to output DC power to a load, the plurality of power conversion devices being connected in parallel to the load, wherein
the power conversion device steps-up, steps-up/steps-down, or steps-down DC power input from a DC power supply and outputs the DC power,
the power conversion device includes:

an output current value acquisition unit configured to acquire an output current value output from the power conversion device;

an output voltage value acquisition unit configured to acquire an output voltage value output from the power conversion device; and

a control unit configured to control an output voltage output from the power conversion device,
the control unit includes:

a correction value generation unit configured to generate an output current correction value for correcting the output current value based on an output current target value, which is a target value of an output current output from the power conversion device, and the output current value; and

a droop control unit configured to droop an output voltage target value, which is a target value of the output voltage output from the power conversion device, based on a corrected output current value, which is the output current value corrected by the output current correction value,

the power conversion device controls the output voltage based on the output voltage target value drooped and the output voltage value, and

the power conversion device includes an output current target value calculation unit configured to calculate the output current target value of the power conversion device included in the DC power supply system by distributing, to the plurality of power conversion devices, a total value of the output current values output from the plurality of power conversion devices included in the DC power supply system or a load current value input to the load according to a predetermined distribution method.

7. The DC power supply system according to claim 6, wherein
the correction value generation unit adjusts the output current correction value based on a difference between the output current target value and the output current value.

8. The DC power supply system according to claim 6, wherein
the correction value generation unit increases or decreases the output current correction value in accordance with a relationship between the output voltage value and a predetermined voltage value range and a relationship between the output current value and a predetermined current value range.

9. The DC power supply system according to claim 6, wherein

the output current target value calculation unit performs the distribution,
when the power to be supplied to the load is an amount of power suppliable by some power conversion devices of the plurality of power conversion devices, to reduce an operation rate of the power conversion devices included in the plurality of power conversion devices.

10. A DC power supply system comprising:

a first type power conversion device configured to step up, step-up/step-down, or step down DC power input from a first type DC power supply and output the DC power; and

a second type power conversion device configured to step up, step-up/step-down, or step down DC power input from a second type DC power supply and output the DC power, wherein
the first type power conversion device includes:

a first type output current value acquisition unit configured to acquire a first type output current value output from the first type power conversion device;

a first type output voltage value acquisition unit configured to acquire a first type output voltage value output from the first type power conversion device; and

a first type control unit configured to control a first type output voltage output from the first type power conversion device,
the first type control unit includes:

a correction value generation unit configured to generate a first type output current correction value for correcting the first type output current value based on a first type output current target value, which is a target value of a first type output current output from the first type power conversion device, and the first type output current value; and

a first type droop control unit configured to droop a first type output voltage target value, which is a target value of the first type output voltage output from the first type power conversion device, based on a first type corrected output current value, which is the first type output current value corrected by the first type output current correction value,

the first type power conversion device controls the first type output voltage based on the first type output voltage target value drooped and the first type output voltage value,
the second type power conversion device includes:

a second type output current value acquisition unit configured to acquire a second type output current value output from the second type power conversion device;

a second type output voltage value acquisition unit configured to acquire a second type output voltage value output from the second type power conversion device; and

a second type control unit configured to control a second type output voltage output from the second type power conversion device,

the second type control unit includes:

> a second type droop control unit configured to droop a second type output voltage target value, which is a target value of the second type output voltage output from the second type power conversion device, based on the second type output current value; and
>
> the second type power conversion device configured to control the second type output voltage based on the second type output voltage target value drooped and the second type output voltage value,
>
> the DC power supply system supplies DC power to a load by connecting a plurality of the first type power conversion devices and one or more of the second type power conversion devices in parallel, and
>
> the DC power supply system includes an output current target value calculation unit configured to calculate the first type output current target value of the first type power conversion device included in the DC power supply system by distributing, to the first type power conversion device and the second type power conversion device, a total value of the first type output current value and the second type output current value or a load current value input to the load according to a predetermined distribution method.

11. The DC power supply system according to claim 10, wherein
the second type power conversion device is set based on an amount of power suppliable to the load.

12. The DC power supply system according to claim 10 or 11, wherein
the correction value generation unit adjusts the first type output current correction value based on a difference between the first type output current target value and the first type output current value.

13. The DC power supply system according to claim 10 or 11, wherein
the correction value generation unit increases or decreases the first type output current correction value in accordance with a relationship between the first type output voltage value and a predetermined voltage value range and a relationship between the first type output current value and a predetermined current value range.

FIG. 1

EP 4 633 022 A1

FIG. 2

```
                    ┌──────────┐
                    │  START   │
                    └────┬─────┘
                         │                    S1
                         ▼
        ┌────────────────────────────────────┐
        │  DETECT OUTPUT CURRENT VALUE OF EACH│
        │              CONVERTER              │
        └────────────────┬───────────────────┘
                         │                    S2
                         ▼
        ┌────────────────────────────────────┐
        │  AVERAGE PROCESSING OF OUTPUT CURRENT│
        │       VALUE OF EACH CONVERTER       │
        └────────────────┬───────────────────┘
                         │                    S3
                         ▼
        ┌────────────────────────────────────┐
        │     CALCULATE TOTAL CURRENT VALUE OF│
        │  AVERAGE VALUES OF OUTPUT CURRENT   │
        │       VALUES OF  CONVERTERS         │
        └────────────────┬───────────────────┘
                         │                    S4
                         ▼
        ┌────────────────────────────────────┐
        │ DETERMINATE DISTRIBUTION METHOD OF OUTPUT│
        │    CURRENT VALUE OF EACH CONVERTER  │
        └────────────────┬───────────────────┘
                         │                    S5
                         ▼
        ┌────────────────────────────────────┐
        │ CALCULATE OUTPUT CURRENT TARGET VALUE OF│
        │ EACH CONVERTER FROM TOTAL CURRENT VALUE BY│
        │     DETERMINED DISTRIBUTION METHOD  │
        └────────────────┬───────────────────┘
                         │                    S6
                         ▼
        ┌────────────────────────────────────┐
        │ GENERATE, BY EACH CONVERTER, A CROSS FLOW│
        │ TARGET VALUE BASED ON OUTPUT CURRENT TARGET│
        │               VALUE                 │
        └────────────────┬───────────────────┘
                         │
                         ▼
                    ┌──────────┐
                    │   END    │
                    └──────────┘
```

FIG. 3

FIG. 4

## OUTPUT VOLTAGE

## OUTPUT CURRENT OF EACH MACHINE

FIG. 5

## OUTPUT VOLTAGE

## OUTPUT CURRENT OF EACH MACHINE

FIG. 6

OUTPUT VOLTAGE

OUTPUT CURRENT OF EACH MACHINE

FIG. 7

OUTPUT VOLTAGE

OUTPUT CURRENT OF EACH MACHINE

FIG. 8

FIG. 9

EP 4 633 022 A1

FIG. 10

FIG. 11

EP 4 633 022 A1

## FIG. 12

OUTPUT VOLTAGE

OUTPUT CURRENT OF EACH MACHINE

LOAD CURRENT

OUTPUT CURRENT io1

OUTPUT CURRENT io2, OUTPUTCURRENT io3

Time [sec]

FIG. 13

OUTPUT VOLTAGE

OUTPUT CURRENT OF EACH MACHINE

LOAD
CURRENT

OUTPUT
CURRENT
io1

Time [sec]

OUTPUT CURRENT io2,
OUTPUTCURRENT io3

FIG. 14

## OUTPUT VOLTAGE

## OUTPUT CURRENT OF EACH MACHINE

FIG. 15

OUTPUT VOLTAGE

OUTPUT CURRENT OF EACH MACHINE

FIG. 16

FIG. 17

EP 4 633 022 A1

FIG. 18

## INTERNATIONAL SEARCH REPORT

| International application No. |
| --- |
| **PCT/JP2023/047111** |

**A. CLASSIFICATION OF SUBJECT MATTER**

*H02M 3/00*(2006.01)i; *H02J 1/00*(2006.01)i
FI:    H02M3/00 W; H02J1/00 306F

According to International Patent Classification (IPC) or to both national classification and IPC

**B. FIELDS SEARCHED**

Minimum documentation searched (classification system followed by classification symbols)

H02M3/00; H02J1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-523844 A (ZTE CORP.) 13 August 2015 (2015-08-13) paragraphs [0051], [0056]-[0058], fig. 13, 14 | 1-4, 6, 7 |
| A | | 5, 8-13 |
| A | CN 114726034 A (DALIAN MARITIME UNIVERSITY) 08 July 2022 (2022-07-08) entire text, all drawings | 1-13 |
| A | WO 2020/161767 A1 (TDK CORPORATION) 13 August 2020 (2020-08-13) entire text, all drawings | 1-13 |
| A | JP 2014-096935 A (ORIGIN ELECTRIC CO., LTD.) 22 May 2014 (2014-05-22) entire text, all drawings | 1-13 |
| A | CN 112688295 A (UNIVERSITY OF ELECTRONIC SCIENCE AND TECHNOLOGY OF CHINA) 20 April 2021 (2021-04-20) entire text, all drawings | 1-13 |

☐ Further documents are listed in the continuation of Box C.  ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 February 2024** | **12 March 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/047111**

| Patent document cited in search report | | | Publication date (day/month/year) | Patent family member(s) | | | Publication date (day/month/year) |
|---|---|---|---|---|---|---|---|
| JP | 2015-523844 | A | 13 August 2015 | US paragraphs [0072], [0078]-[0080], fig. 13, 14 EP CN | 2015/0130426 2852257 103812508 | A1 A1 A | |
| CN | 114726034 | A | 08 July 2022 | (Family: none) | | | |
| WO | 2020/161767 | A1 | 13 August 2020 | US entire text, all drawings | 2022/0094191 | A1 | |
| JP | 2014-096935 | A | 22 May 2014 | (Family: none) | | | |
| CN | 112688295 | A | 20 April 2021 | (Family: none) | | | |

Form PCT/ISA/210 (patent family annex) (July 2022)

**EP 4 633 022 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020120465 A